(19) Europäisches Patentamt
European Patent Office
Office européen des brevets

(11) **EP 1 978 507 A1**

(12) **EUROPEAN PATENT APPLICATION**
published in accordance with Art. 158(3) EPC

(43) Date of publication:
**08.10.2008 Bulletin 2008/41**

(51) Int Cl.:
*G09G 5/36* (2006.01)    *G06F 3/048* (2006.01)
*G06T 11/60* (2006.01)    *G09G 5/00* (2006.01)
*H04N 1/393* (2006.01)

(21) Application number: **07713703.2**

(22) Date of filing: **25.01.2007**

(86) International application number:
**PCT/JP2007/051171**

(87) International publication number:
**WO 2007/086462 (02.08.2007 Gazette 2007/31)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.01.2006 JP 2006019814**

(71) Applicant: **Brother Kogyo Kabushiki Kaisha Nagoya-shi, Aichi-ken 467-8561 (JP)**

(72) Inventors:
• **KONDO, Yoshiyuki**
  **Nagoya-shi**
  **Aichi 467-8562 (JP)**

• **FUJII, Norihisa**
  **Nagoya-shi**
  **Aichi 467-8562 (JP)**

(74) Representative: **Smith, Samuel Leonard**
  **J.A. Kemp & Co.**
  **14 South Square**
  **Gray's Inn**
  **London WC1R 5JJ (GB)**

(54) **DISPLAY DEVICE**

(57)    A display device includes a display panel (2) with a first area, having a rectangular display region whose longer and shorter sides are provided at an aspect ratio of a (a > 1); a reading means (15) for reading a rectangular original image; and a control means (10) for controlling display of the original image on the display panel. The control means (10) includes a magnified-image producing means (11) for producing a magnified image by magnifying the original image by a predetermined scale; an image defining means (11) for defining a partial magnified image which has a predetermined width and an area equal to or smaller than the first area, by dividing the magnified image along a divisional line extending in parallel with either one of a longer side direction and a shorter side direction; and a display control means (11, 16) for displaying the whole partial magnified image in the display region.

FIG.4(A)

EP 1 978 507 A1

**(Cont. next page)**

## FIG.4(B)

123456789
ABCDEFG
HIJKLMN
OPQRSTU
XWXYZ

WPs

## FIG.4(C)

12345
ABCD
6789
EFG

WPs

D

MAGNIFICATION

BACK    CONTRACTION    NEXT

## FIG.4(D)

D    2    WPs

BACK    MAGNIFICATION    CONTRACTION    NEXT

12345
6789

**Description**

Technical Field

The present invention relates to a display device, and more particularly to a display device capable of magnifying a displayed image with a simple operation, thereby improving visibility.

Background Art

A display device having a display panel for displaying a data file thereon is known such as a personal computer, a PDA (personal digital assistant) or a mobile phone. In order to improve visibility, the display device can magnify a displayed image so as to display the magnified image on the display panel (See Japanese Patent Publication Hei08-87521).

Patent Document 1: Japanese Patent Publication Hei 08-87521

Disclosure of the Invention

Problem to be Solved by the Invention

However, when a displayed image is magnified, for example, a part of the page corresponding to the image sometimes extends off the display panel, so that the part cannot be displayed. This means that a user cannot view the whole page at one time. In order to view the whole page, the user has to shift the displayed image up and down or to the right and left by scrolling. This sometimes requires a burdensome operation. While a document file is being displayed, the user reads one line at a time. Therefore, at least the whole character string corresponding to one line is preferably viewable at the same time. However, if the displayed image is simply magnified, each line is interrupted in mid-character string. The user has to scroll the image to read each character string corresponding to one line through the end thereof. Furthermore, after finishing reading the character string corresponding to one line, the user has to scroll the image again so that the head of the character string corresponding to the next line becomes viewable. Therefore, the user has to scroll the image frequently to read through the document.

If an electrophoretic display panel is employed, the electrophoretic display panel requires time for switching from the displayed image to another image. The user has to wait for a long time. When the user requires frequent switching operation, the user has to wait for a time long enough that the user feels that the switching operation is burdensome.

In view of the foregoing, it is an object of the present invention to provide a display device capable of magnifying a displayed image with a simple operation for display, thereby enhancing usability.

Means for Solving the Problem

The invention as set forth in claim 1 features A display device, comprising: a display panel having a rectangular display region with a first area, and having a longer side and a shorter side with an aspect ratio of a (a > 1); a reading means for reading a rectangular original image; and a control means for controlling display of the original image on the display panel, wherein the control means includes: magnified-image producing means for magnifying the original image by a predetermined scale to produce a magnified image; image defining means for dividing the magnified image by a divisional line extending in parallel with either one of a longer side direction and a shorter side direction, to define a partial magnified image having a predetermined width and an area equal to or less than the first area; and display control means for displaying a whole of the partial magnified image in the display region.

The invention as set forth in claim 2 features the display device as claimed in claim 1, wherein, if the predetermined scale is larger than one-fold, and equal to or less than a-fold, the image defining means divides the magnified image by the divisional line extending in parallel with the shorter side direction to define the partial magnified image having a width equal to or less than $1/(a^2)$ of a total width of the magnified image, and the display control means rotates the partial magnified image by 90 degrees to produce the display image, thereby displaying the display image in the display region.

The invention as set forth in claim 3 features the display device as claimed in claim 1, wherein, if the predetermined scale is larger than a-fold, and equal to or less than n-fold (n is an integer equal to or more than 2), the image defining means divides the magnified image by a first divisional line extending in parallel with the shorter side direction to define the partial magnified image having a width equal to or less than $1/(n^2)$ of a total width thereof, and the display control means divides the partial magnified image into n-number of provisional images by a second divisional line extending in parallel with the longer side direction, arranges and combines the n-number of provisional images in order in the longer side direction, thereby displaying combined images in the display region.

The invention as set forth in claim 4 features the display device as claimed in claim 1, wherein, if the predetermined scale is larger than n-fold, and equal to or less than (a*n)-fold (n is an integer equal to or more than 2), the image defining means divides the magnified image by a first divisional line extending in parallel with the shorter side direction to define the partial magnified image having a width equal to or less than $1/((a \cdot n)^2)$ of a total width thereof, and the display control means divides the partial magnified image into n-number of provisional images by a second divisional line extending in parallel with the longer side direction, arranges and combines the n-number of provisional images in order in the longer side direction, rotates the combined images by 90 degrees, thereby displaying the combined and rotated images in the display region.

The invention as set forth in claim 5 features the display device as claimed in claim 1, wherein, if n is an integer equal to or more than 1, and the predetermined scale is larger than n-fold and equal to or less than a•n-fold, the image defining means divides the magnified image by a first divisional line extending in parallel with the longer side direction to define the partial magnified image having a width equal to or less than $1/((2n)^2)$ of a total width thereof, and the display control means divides the partial magnified image into n-number of provisional images by a second divisional line extending in parallel with the shorter side direction, arranges and combines the n-number of provisional images in order in the shorter side direction, and rotates the combined images by 90 degrees, thereby displaying the rotated and combined images in the display region.

The invention as set forth in claim 6 features the display device as claimed in claim 1, wherein, if n is an integer equal to or more than 2, and the predetermined scale is larger than (n-1)-fold and equal to or less than n-fold, the image defining means divides the magnified image by a first divisional line extending in parallel with the longer side direction to define the partial magnified image having a width equal to or less than $1/(n^2)$ of a total width thereof, and the display control means divides the partial magnified image into n-number of provisional images by a second divisional line extending in parallel with the shorter side direction, and arranges and combines the n-number of provisional images in order in the shorter side direction, thereby displaying the combined images in the display region.

The invention as set forth in claim 7 features a device comprising: display means having a rectangular data display region; reading means for reading original image data corresponding to a rectangular original image; magnified-image producing means for producing magnified image data from the original image data according to a magnification scale inputted by a user for displaying magnified image which is magnified with the original image; and control means for outputting at least a part of the magnified image data or the original image data to the display means and displaying either the at least a part of the magnified image or the original image in the data display region, characterized by further comprising: image determination means for dividing the magnified image in a first direction to define a partial magnified image having a predetermined width, the first direction being either one of a longitudinal direction and a lateral direction, wherein the partial magnified image includes a range from one end through the other end in a second direction orthogonal to the first direction, and has an area equal to or less than an area of the data display region, and the control means outputs a part of the magnified image data corresponding to the partial magnified image to the display means, thereby displaying the partial magnified image in the data display region as a whole.

The invention as set forth in claim 8 features the display device as claimed in claim 7, wherein, if a second direction of the original image to be displayed in the data display region coincides with a shorter side direction of the data display region, the control means rotates the partial magnified image by 90 degrees relative to the original image so that the second direction of the partial magnified image coincides with a longer side direction of the data display region, and displays the partial magnified image in the data display region.

The invention as set forth in claim 9 features the display device as claimed in claim 8, wherein, if a physical length of the partial magnified image in the second direction is larger than a length of the data display region in the shorter side direction and smaller than a length thereof in the longer side direction, the control means rotates the partial magnified image by 90 degrees relative to the original image to coincide the second direction of the partial magnified image with the longer side direction of the data display region, and displays the partial magnified image in the data display region.

The invention as set forth in claim 10 features the display device as claimed in claim 7, further comprising division means for dividing the data display region into n-number of divided display regions (n is an integer equal to or more that 2), wherein the control means divides the partial magnified image into n-number of auxiliary images in the second direction, allocates the n-number of auxiliary images sequentially to the divided display regions, and displays the partial magnified image as a whole.

The invention as set forth in claim 11 features the display device (1) as claimed in claim 10, wherein, if the second direction of the original image coincides with a shorter side direction of the data display region and a physical length of the partial magnified image in the second direction is equal to or less than a value obtained by multiplying n-fold of a length of the data display region in the shorter side direction, the division means arranges the n-number of divided display regions in a longer side direction of the data display region.

The invention as set forth in claim 12 features the display device as claimed in claim 10, wherein if a physical length of the partial magnified image in the second direction is larger than a value obtained by multiplying n-fold of a length of the data display region in the shorter side direction thereof, the division means divides the data display region into n-number of divided display regions to be arranged in the shorter side direction, the control means divides the partial magnified image into n-number of auxiliary images in the second direction; allocates the n-number of auxiliary images to respective n-number of divided regions for display and rotates each of the n-number of auxiliary images by 90 degrees relative to the original image to coincide the second direction with the longer side direction of the data display region, and displays the partial magnified image in the data display region as a whole.

The invention as set forth in claim 13 features the display device as claimed in any one of claims 7 to 12, wherein if the original image is a vertical-writing style document having a line including a character or a symbol arranged vertically, the image determination means determines the partial magnified image with a lateral direction of the original image regarding as the first direction, and if the original image is a horizontal-writing style document having a line including a character or a symbol arranged laterally, the image determination means determines the partial magnified image with a vertical direction of the original image regarding as the first direction.

The invention as set forth in claim 14 features the display device as claimed in claim 13, wherein the original image data includes document data for specifying whether the original image is the vertical-writing style document or the horizontal-writing style document, and the image determination means defines the partial magnified image including a range from one end through the other end of the magnified image in the second direction, referring to the document data.

The invention as set forth in claim 15 features the display device as claimed in claim 13, further comprising a document determination means for analyzing the original image data to determine whether the original image is the vertical-writing style document or the horizontal-writing style document, wherein the image determination means defines the partial magnified image including from one end through the other end of the magnified image in the second direction, based on a determination by the document determination means.

The invention as set forth in claim 16 features the display device as claimed in claim 7, further comprising: detection means for detecting orientation of the data display region with respect to the user, wherein if the detection means detects that the orientation has been changed, the magnified-image producing means produces the magnified image data based on the original image data, the image determination means defines the partial magnified image including from one end through the other end of the magnified image in the second direction and having an area equal to or less than the area of the data display region, and the control means rotates the partial magnified image by 90 degrees relative to the original image to coincide the second direction of the partial magnified image with a longer side direction of the data display region, and displays the partial magnified image in the data display region.

Effects of the Invention

According to the display device of the present invention, the partial magnified image includes the range from one end through the other end of the original image. Therefore, the display panel displays the range from the one end through the other end of the magnified image corresponding to the range from the one end through the other end of the original image. For example, if the original image has been processed from a document file, the user can view the range from one end through the other end of the original image in the direction parallel to the division line without scrolling the image on the screen. This operation reduces complexity in operating the display device when the original image is magnified for display.

According to the display device of the present invention, the partial magnified image includes at least the range from the one end through the other end in the second direction. Therefore, the user can view the range from the one end through the other end at one time in the second direction without scrolling the image on the screen. This operation reduces complexity in operating the display device when the original image is magnified for display.

Furthermore, the partial magnified image is determined based on the result determined by the document determination means. Accordingly, when the original image data does not include the document data for specifying whether the original image is in the vertical-writing style document or in the horizontal writing style document, the range covering from the one end through the other end in the document reading direction can be displayed on the display panel.

Brief Explanation of Drawings

Fig. 1 is a perspective view showing a display device according to a first embodiment of the present invention;
Fig. 2 is a block diagram showing the circuitry of the display device shown in Fig. 1;
Fig. 3 is a view showing a status in which the display device shown in Fig. 1 is in a landscape orientation;
Fig. 4 (A) shows a case in which a page image P is magnified by 133% for display; Fig. 4(B) shows a case in which the page image P is magnified by 133% and then rotated by 90 degrees for display; Fig. 4(C) shows a case in which the page image P is magnified by 200% for display; and Fig. 4(C) shows a case in which the page image P is magnified by 266% for display;

Fig. 5(A) schematically shows a display region height table; Fig. 5(B) shows a display region height when the page image P is magnified by 100%; Fig. 5(C) shows a display regions height when the page image P is magnified by 133%; Fig. 5(D) shows a display region height when the page image P is magnified by 200%; and Fig. 5(E) shows a display region height when the page image P is magnified by 266%;

Fig. 6 is a view illustrating an aspect ratio of the display panel;

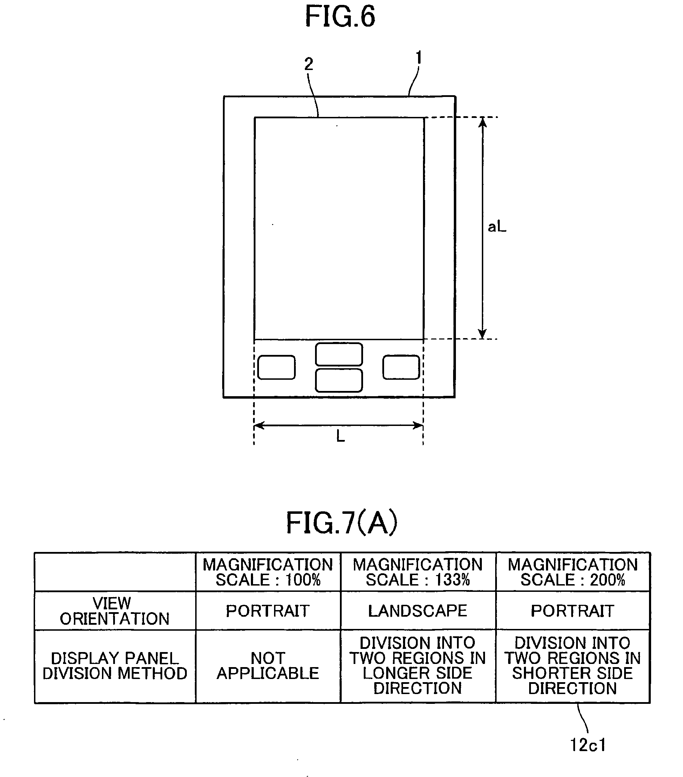

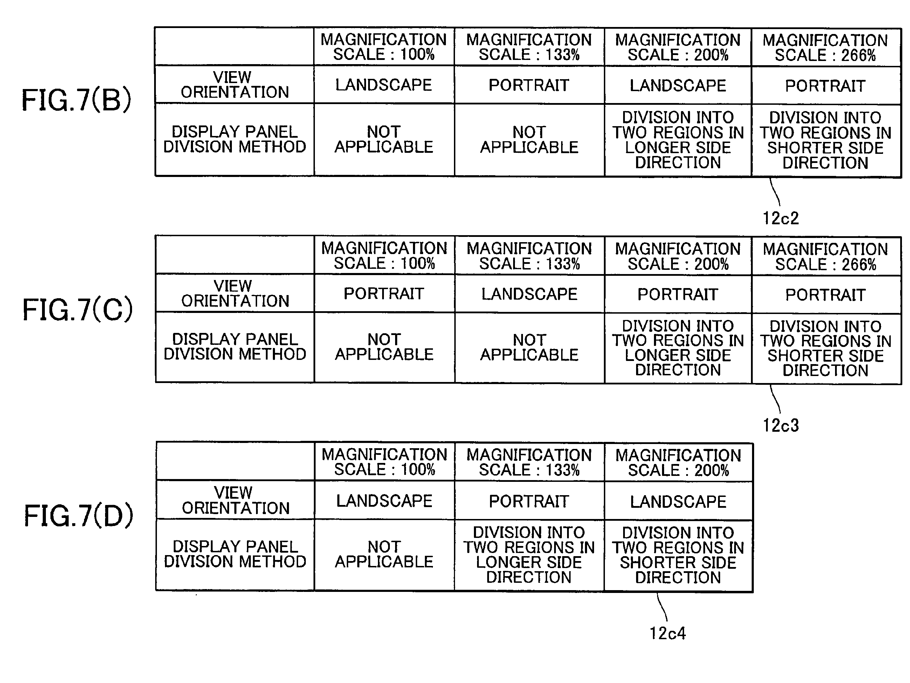

Fig. 7(A) is a magnification display setting table showing magnification scales to be employed for a vertical-writing style-portrait mode document file; Fig. 7(B) is a magnification display setting table showing magnification scales to be employed for a vertical-writing style-landscape mode document file; Fig. 7(C) is a magnification display setting table showing magnification scales to be employed for a horizontal writing style-portrait mode document file; and Fig. 7(D) is a magnification display setting table showing magnification scales to be employed for a horizontal writing style-landscape mode document file;

Fig. 8 is a flowchart showing a main process;

Fig. 9 is a flowchart showing a page forward process;

Fig. 10 shows a relation between the magnified image WP magnified by 133% and the partial magnified image WPs, FIG. 10 (A) shows a case in which "44" is employed as the display start position S; and Fig. 10(B) shows a case in which "0" is employed as the display start position S;

Fig. 11 is a flowchart showing a page return process;

Fig. 12 is a flowchart showing a magnification scale change process;

Fig. 13 is a flowchart showing a display process;

Fig. 14(A) illustrates the display region of the display panel when a horizontal writing style-portrait mode page image is magnified by 200% for display; Fig. 14 (B) shows the magnified image WP magnified by 200%; Fig. 14(C) shows a partial magnified image WPs which employs "0" as the display start position S; and Fig. 14(D) shows a partial magnified image WPs which employs "25" as the display start position S and "25" as the display region height H;

Fig. 15(A) illustrates the display region of the display panel when a horizontal writing style-portrait mode page image is magnified by 266% for display; Fig. 15(B) shows the magnified image WP magnified by 266%; Fig. 15(C) shows a partial magnified image WPs which employs "0" as the display start position S; and Fig. 15(D) shows a partial magnified image WPs which employs "14" as the display start position S and "14" as the display region height H;

Fig. 16(A) shows a vertical writing style-portrait mode page image P; Fig. 16(B) shows a status in which the partial magnified image WPs magnified by 133% is displayed on the display panel; and Fig. 16(C) shows a status in which the partial magnified image WPs magnified by 200% is displayed on the display panel;

Fig. 17(A) shows a horizontal writing style-landscape mode page image P; Fig. 17 (B) shows a status in which the partial magnified image WPs magnified by 133% is displayed on the display panel; and Fig. 17(C) shows a status in which the partial magnified image WPs magnified by 200% is displayed on the display panel;

Fig. 18(A) shows a vertical writing style-landscape mode page image P; Fig. 18(B) shows a status in which the partial magnified image WPs magnified by 133% is displayed on the display panel; Fig. 18(C) shows a status in which the partial magnified image WPs magnified by 200% is displayed on the display panel; and Fig. 18(D) shows a status in which the partial magnified image WPs magnified by 266% is displayed on the display panel; and

Fig. 19 is a flowchart showing a main process according to a second embodiment of the present invention.

Explanation of Reference Numerals

1    display device
2    display panel
3    control circuit
6    memory card
11   CPU

Best Mode for Currying out the Invention

Embodiments according to the present invention will be described referring to the accompanied drawings. The directions "front", "rear", "above", "below", "right", and "left" are used throughout the description to define the various parts of the display device 1 when the display device 1 is disposed in an orientation in which it is intended to be used.

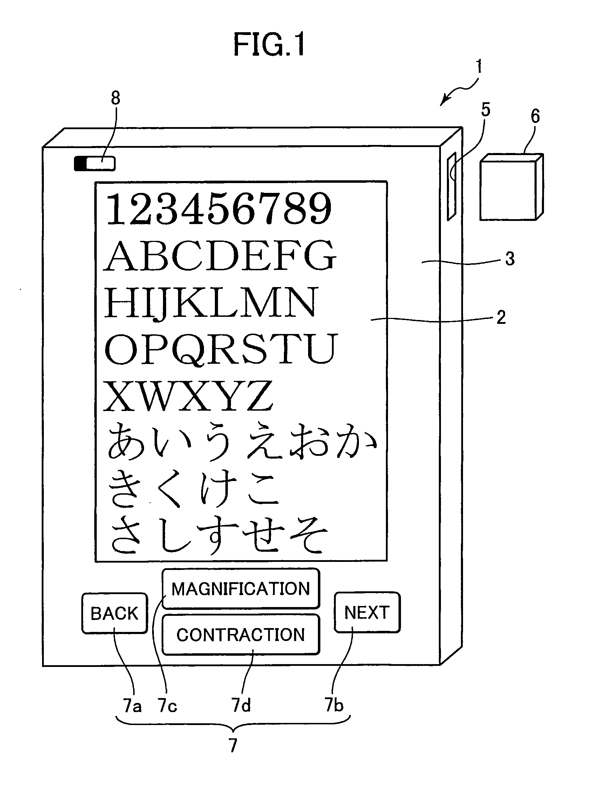

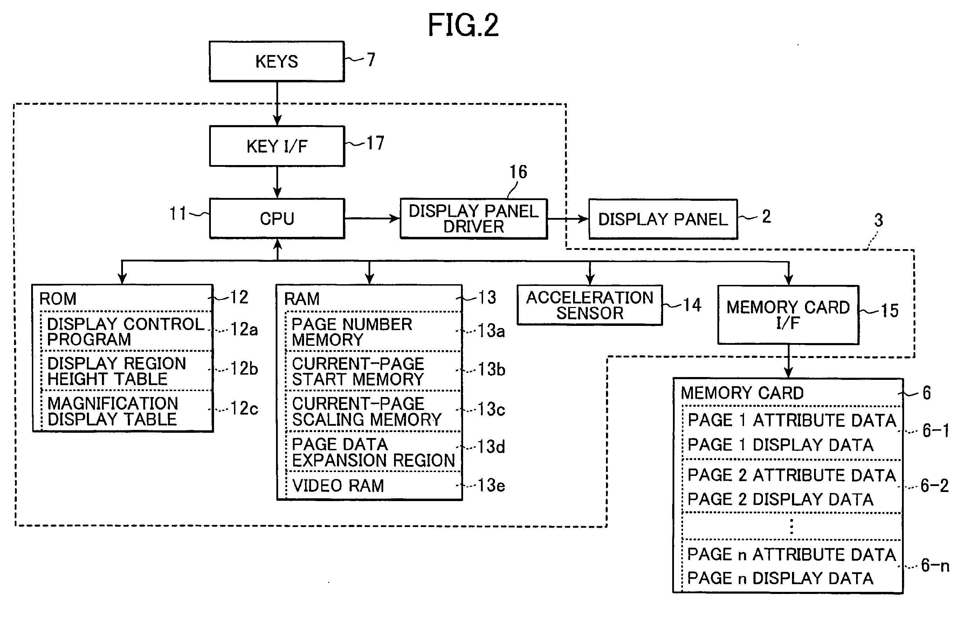

FIG. 1 shows a display device according to one embodiment of the present invention. The display device 1 includes a display panel 2; a control circuit 3 for controlling the display panel 2 (see Fig. 2); and a main body 4 embracing the periphery of the display panel 2 and holding the display panel 2. The display device 1 displays an image on the display panel 2 when a user performs a predetermined operation. In the display device 1, which is a so-called portrait-type display panel, the longer side of the display panel 2 corresponds to a longitudinal direction and the shorter side thereof corresponds to a lateral direction. In this embodiment, the display panel 2 has an aspect ratio (ratio of the longer side relative to the shorter side) of 1.33. It is noted that the aspect ratio of the display panel 2 is not limited to 1.33, and an arbitrary value can be taken for the aspect ratio.

The display panel 2 includes an electrophoretic display panel. In the display panel 2, two substrates facing each other are arranged at a predetermined interval through a spacer so as to form a sealed space. The front substrate configured to face the user is transparent. A display liquid obtained by dispersing particles in a dispersion medium is filled in the sealed space. The color of the particles is different from the color of the dispersion medium. The display panel 2 further includes a means for applying an electric field to the display liquid. The display panel 2 has a display region of a predetermined area. When the electric field is applied across the display liquid, the particles in the display liquid are moved to the transparent substrate side, thereby bringing the color of the particles onto the panel surface. When an electric field is applied in the opposite direction, the particles are moved to the back side of the display panel, thereby bringing the color of the dispersion medium onto the panel surface. By controlling the direction of the electric field to be applied to the display liquid in this way, an image can be displayed on the display panel 2.

In an upper portion of the main body 3 above the display panel 2, a memory card slot 5 for receiving a memory card 6 is provided. An original image is read from the memory card 6 into the display device 1 via the memory card slot 5.

As shown in Fig. 2, the control circuit 3 includes a CPU 11; a ROM 12; a RAM 13; an acceleration sensor 14; a memory card interface 15 (memory card I/F 15) connectable to the memory card 6; a display panel driver 16; and a key interface 17 (key I/F 17).

The CPU 11 is a processing unit for controlling the display device 1 as a whole. The CPU 11 is connected to the ROM 12, the RAM 13, the acceleration sensor 14, the memory card I/F 15, the display panel driver 16, and the key I/F 17.

The ROM 12 is an unrewritable memory. The ROM 12 stores various control programs to be executed by the CPU 11, and fixed value data to be referred to when each of the control programs is executed.

The RAM 13 is a rewritable memory for storing various kinds of data required for the control programs to be executed by the CPU 11. The RAM 13 includes a page number memory 13a, a current-page start memory 13b, a current-page scaling memory 13c, a page data expansion region 13d, and a video RAM 13e. The page number memory 13a stores the page number of the image which is displayed on the display panel 2. The current-page start memory 13b stores the display start position S of the display image. The current-page scaling memory 13c stores magnification scales of the display image. In this embodiment, the current-page scaling memory 13c stores one of the magnification scale values 100%, 133%, 200%, and 266%, depending on the user's selection. The page data expansion region 13d is a region in which the original image data read from the memory card 6 is expanded at the magnification scale stored in the current-page scaling memory 13c. At least a part of the original image data expanded in the page data expansion region 13d is transmitted to the video RAM 13e. The video RAM 13e stores display data produced based on the data transmitted from the page data expansion region 13d.

The acceleration sensor 14 detects the acceleration of gravity to determine the orientation of the display panel 2. relative to the user. The memory card I/F 15 allows data transmission and reception between the CPU 11 and the memory card 6 inserted into the memory card slot 5. The display panel driver 16 is connected to the display panel 2. The display panel driver 16 transmits the display data outputted from the video RAM 13e to the display panel 2, and then displays the display image on the display panel 2. The key I/F 17 is connected to keys 7. The key I/F 17 allows the user to input an instruction to magnify or contract each image to the control circuit 3 through the keys 7.

The keys 7 include a back key 7a, a next key 7b, a magnification key 7c, and a contraction key 7d. The back key 7a and the next key 7b are provided below the display panel 2 on the front surface of the main body 3. The magnification key 7c and the contraction key 7d are arranged between the back key 7a and the next key 7b. The magnification key 7c accepts a display image magnification instruction. The contraction key 7d accepts a display image contraction instruction. A power switch 8 is provided at a portion of the main body 3 above the display panel 2. When the user turns the power switch 8 on, the CPU 11 starts sending electricity to the display panel 2 and the control circuit 3.

On the other hand, the memory card 6 readable by the display device 1 includes a plurality of page-data storage regions 6-1, 6-2...and 6-n (n is an integer larger than 1) to store the original image data corresponding to each original image. In each page-data storage region, page display data corresponding to the original image for each page, and page attribute data indicating the attribute of the page display data are stored together. The page attribute data indicates the orientation of the data corresponding to the original image for each page, i.e. in which mode the data is created: in a portrait mode or in a landscape mode. If the page display data is a text file, the page attribute data indicates the orientation of the character string contained in the file, i.e. in which style the text file has been created, in a horizontal writing style or in a vertical writing style. The page display data has a page number. The page display data is managed by the page number.

Next, the operation of the display device 1 having the above configuration will be described. As the user inserts the memory card 6 into the memory card slot 5 to display the original image stored in the memory card 6, the CPU 11 accesses a page-data storage region 6-i (i is an integer equal to or more than 1 and equal to or less than n) which stores the page display data having a predetermined page number, and then loads the page display data from the page-data storage region 6-i. The control circuit 3 displays the image corresponding to the page display data on the display panel 2. In this embodiment, when the page display data stored in one page-data storage region is displayed to be fitted to the size of the display panel 2 (standard size), the rectangular image displayed on the display panel 2 is referred to as a page image P. Furthermore, as to the magnified image WP produced by magnifying the page image P, the image actually displayed on the display panel 2 is referred to as a partial magnified image WPs.

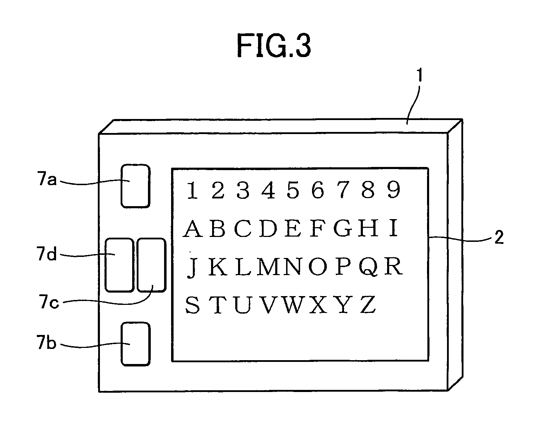

In this case, the control circuit 3 displays the page image P so that the longer side direction thereof coincides with the longer side direction of the display panel 2. If the page image P has been created in the portrait mode (vertically oriented), the control circuit 3 uses the display panel 2 in a portrait manner, as shown in Fig. 1. Specifically, the display panel 2 is orientated for the user looking at the display panel 2 so that the longer side of the display panel 2 extends vertically and the shorter side thereof extends horizontally. On the other hand, if the page image P has been created in the landscape mode, the control circuit 3 uses the display panel 2 in a landscape manner, as shown in Fig. 3. Specifically, the display unit 2 is oriented for the user so that the longer side of the display panel 2 extends horizontally, and the shorter side thereof extends vertically. Hereinafter, the following case will be described: the page display data is in a horizontal writing style-portrait mode and consists of a text file, and the page image P of the page display data is displayed on the display panel 2 as shown in Fig. 1.

As shown in Fig. 1, when the user depresses the magnification key 7c one time while the page image P is displayed on the display panel 2, the page image P is magnified by 133%. Next, the user depresses the magnification key 7c again, the page image P is magnified by 200%. When the user depresses the magnification key 7c once again, the page image P is magnified by 266%.

On the other hand, when the user depresses the contraction key 7d while the page image P is displayed on the display panel 2 in a magnified state, the page image P is contracted in the order reverse to the magnification. Therefore, the user can magnify the page image P by one of the magnification scales 100%, 133%, 200%, and 266%, by depressing the magnification key 7c and the contraction key 7d as required.

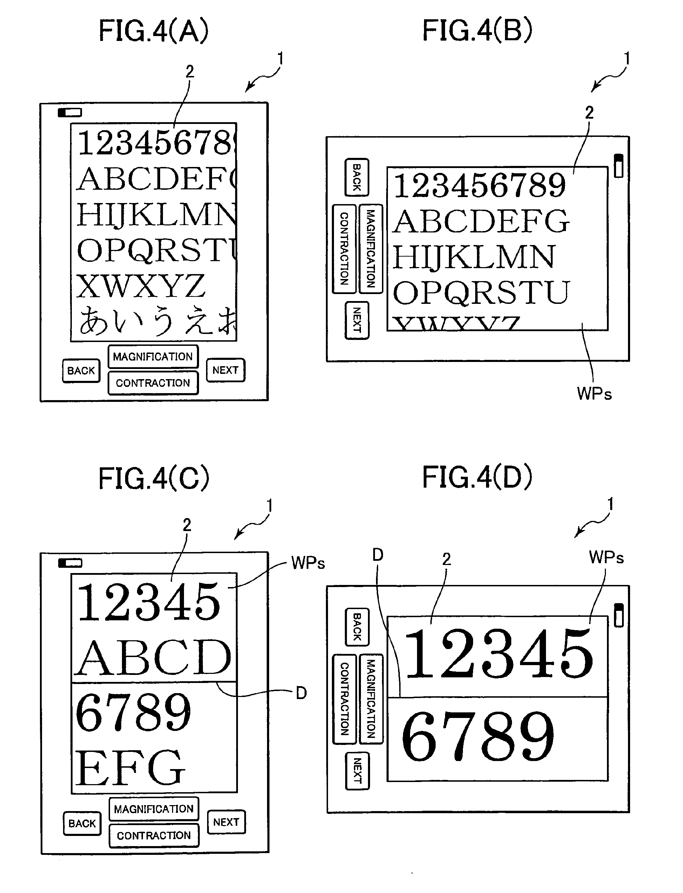

For example, when the user depresses the magnification key 7c while the page image P is displayed on the display panel 2 as shown in Fig. 1, the page image P is magnified by 133% thereby producing a magnified image WP. In this case, the magnified image WP extends off the display panel 2 as shown in Fig. 4(A). In this case, the partial magnified image WPs is rotated by 90 degrees relative to the page image P as shown in Fig. 4(B), so that the longer side direction of the display panel 2 coincides with the line direction of the partial magnified image WPs (lateral direction of the partial magnified image WPs).

When the page image P is magnified by 200%, a division boundary D appears in parallel with the shorter side direction as shown in Fig. 4(C). The display region of the display panel 2 is divided into two regions in the longer side direction. The partial magnified image WPs is divided into two regions so that one character string corresponding to one line is divided to two lines. The divided images are arranged above and below the division boundary D. Specifically, the divided images are combined through the division boundary D in the portrait-mode, and then displayed on the display panel 2 as one combined image.

When the page image P is magnified by 266%, a division boundary D appears in parallel with the longer side direction as shown in Fig. 4(D). The display region of the display panel 2 is divided into two regions in the shorter side direction. The partial magnified image WPs is rotated by 90 degrees relative to the page image P and displayed. In this case, the longer side direction of the display panel 2 coincides with the line direction of the partial magnified image WPs. The partial magnified image WPs is divided into two regions so that one character string corresponding to one line is divided to two lines. The divided images are arranged above and below the division boundary D. Specifically, the divided images are combined in the landscape mode through the division boundary D and displayed on the display panel 2 as one combined image.

As shown in Figs. 4(B) and (D), the partial magnified image WPs is rotated by 90 degrees relative to the page image P, depending on the magnification scale of the partial magnified image WPs, thereby promoting the utilization of the longer side direction of the display panel 2. Because the display region of the display panel 2 is divided into two regions, and the partial magnified image WPs is divided to two images, the divided partial magnified images WPs are simultaneously displayed on both display regions. As a result, one character string corresponding to one line is displayed on the display panel 2 as a whole in a state that the one character string can be viewed at the same time from the head through the end thereof. The user can read the character string corresponding to one line from the head through the end thereof without a switch operation for the displayed image such as a horizontal scroll thereof.

As clear from Fig. 4(A) and Fig. 4(B), when the page image P is displayed on the display panel 2 as shown in Fig. 1, and the page image P is simply magnified depending on the magnification scale, one horizontal character string corresponding to one line of the partial magnified image WPs cannot be displayed simultaneously from the head through the end of the string. In order to contain the whole one character string corresponding to one line from the head through the end in the partial magnified image WPs, the shape of the partial magnified image WPs is appropriately changed according to the magnification scale. The partial magnified image WPs is rotated and/or divided if necessary. Accordingly, the shape of the partial magnified image WPs is modified according to the magnification scale, and the length of the partial magnified image in the column direction orthogonal to the line direction is changed approximately. This length is a value preset according to the aspect ratio of the display panel 2 and the magnification scale. In the following description, the length is referred to as a "display region height H".

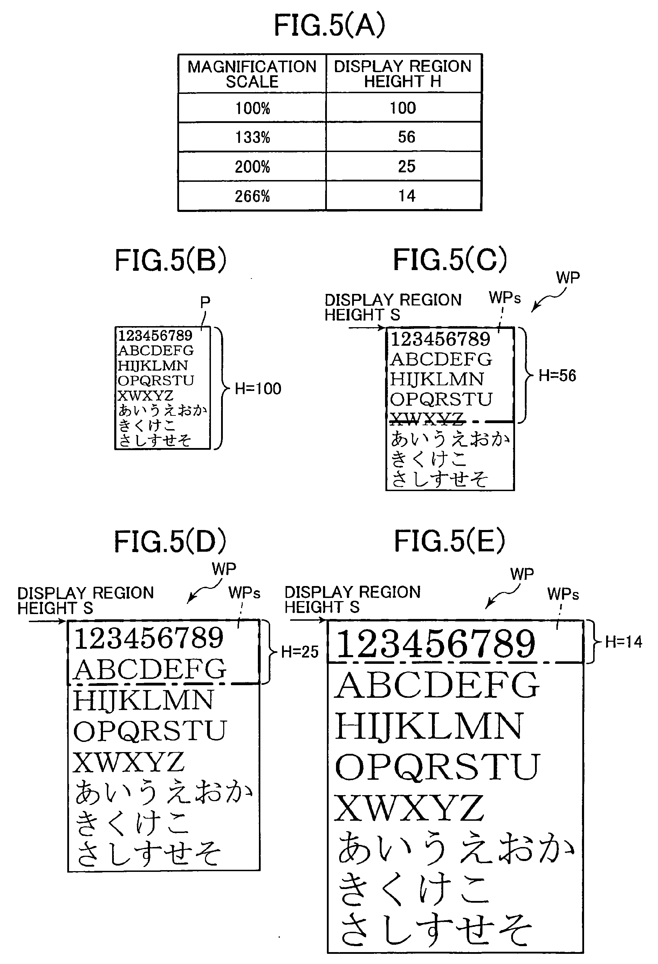

In this embodiment, as shown in Fig. 5(A), the display region height H is predetermined according to the corresponding magnification scale, and stored in a display region height table 12b. The display region height H is a relative value determined based on the length (height) of the longer side of the page image P, as a reference. In this embodiment, "100" is employed as the reference value. The display region height H is determined so that the area of the partial magnified image WPs defined by the display region height H is equal to or smaller than the area of the display panel 2. As a result, the total area of the partial magnified image WPs can be displayed on the display panel 2 at one time.

Next, the relation between the display region height H indicated by FIG. 5(A) and the partial magnified image WPs will be described with reference to Fig. 5(A). Figs. 5(B) to 5(E) schematically show the page image P and the magnified images WP obtained by magnifying the page image P by 133%, 200%, and 266%, respectively. As the page image P is displayed in order to have the same size as the display panel 2 as stated above, the magnified image WP extends off the display panel 2 regardless of the magnification scale. The control circuit 3 selects the region indicated by an alternate long and short dashed line as a partial magnified image WPs from the magnified image WP, as shown in Figs. 5(B) to 5(E). Specifically, the partial magnified image WPs is defined in such a way that the magnified image WP is divided in the longer side direction (direction orthogonal to the line direction) by the display region height H, and that the partial magnified image WPs contains the range from one end (head) through the other end (end) of the magnified image WP in the shorter side direction (line direction).

Generally, the display region height H has the following relations relative to the aspect ratio a of the display panel 2 and to the magnification scale of the page image P, depending on the attribute of the page image P. For example, in order to represent the size of the display panel 2, the length of the shorter side is expressed by L, and the length of the longer side is expressed by aL, as shown in Fig. 6.

(1) The case in which the page image P is in a vertical writing style-landscape mode or a horizontal writing style-portrait mode and magnified by a magnification scale of a-fold or larger and $n_0$-fold or smaller (no is an integer equal to 2 or larger) will be described.

The partial magnified image WPs is divided into no number of images. The divided images are combined vertically in a state that the orientation of the characters is maintained, thereby producing a combined image. In this case, the combined image has a height of $n_0H$. Since the combined image cannot be displayed if the $n_0H$ exceeds the longer side length aL of the display panel 2, the display region height H has to satisfy the following conditions.

$$[\text{Equation 1}]$$

$$n_0H \leq aL$$

$$H \leq (a/n_0)L$$

In this embodiment, since the magnified image WP magnified by a magnification scale of $n_0$-fold has a longer side length $n_0aL$ of 100, the following conditions has to be satisfied.

$$[\text{Equation 2}]$$

$$H \leq (a/n_0)L = (1/n_0^2)n_0aL = 100/(n_0^2)$$

Specifically,

[Equation 3]

$$H \leq 100/(n_0{}^2)$$

(2) The case in which the page image P is in a vertical writing style-landscape mode or horizontal writing style-portrait mode and magnified by a magnification scale of $n_0$-fold or larger and $n_0 \cdot$ a-fold or smaller will be described.

The partial magnified image WPs is divided into $n_0$-number of images. The divided images are combined vertically in a state that the orientation of the characters is maintained, thereby producing a combined image. In this case, the combined image has a height of $n_0H$. Since the combined image cannot be displayed if the $n_0H$ exceeds the longer side length L of the display panel 2, the display region height H has to satisfy the following conditions.

[Equation 4]

$$n_0H \leq L$$

$$H \leq (1/n_0)L$$

In this embodiment, since the magnified image WP magnified by a magnification scale of $n_0 \cdot$ a-fold has a longer side length $n_0a^2L$ of 100, the following conditions has to be satisfied.

[Equation 5]

$$H \leq (1/n_0)L = (1/n_0{}^2 \cdot a^2)n_0a^2L = 100/(n_0{}^2 \cdot a^2)$$

Specifically

[Equation 6]

$$H \leq 100/(n_0{}^2 \cdot a^2)$$

(3) The case in which the page image P is in a vertical writing style-portrait mode or horizontal writing style-landscape mode and magnified by a magnification scale of $n_1$-fold or larger and $n_1 \cdot$ a-fold or smaller ($n_1$ is an integer equal to 1 or larger) will be described.

The partial magnified image WPs is divided into $2n_1$-number of images. The divided images are combined vertically in a state that the orientation of the characters is maintained, thereby producing a combined image. In this case, the combined image has a height of $2n_1H$. Since the combined image cannot be displayed if the $2n_1H$ exceeds the longer side length aL of the display panel 2, the display region height H has to satisfy the following conditions.

[Equation 7]

$$H \leq aL$$

$$H \leq (a/(2n_1))L$$

In this embodiment, since the magnified image WP magnified by a magnification scale of $n_1 \cdot$ a-fold has a longer side length $n_1 aL$ of 100, the following conditions has to be satisfied.
[Equation 8]

$$H \leq (1/(2n_1))anL$$

Specifically,

[Equation 9]

$$H \leq 100/2n^2$$

The aspect ratio has to be equal to the following value or smaller.
[Equation 10]

$$\sqrt{2}$$

When the page image P is magnified by a-fold, the partial magnified image WPs is rotated by 90 degrees relative to the page image P, and the display region is divided into two regions at the same time. Since the page image P has a shorter side length L and a longer side length aL, the a-folded magnified image WP has a shorter side length of aL and a longer side length of $a^2L$.
Since the combined image cannot be displayed if the longer side length $a^2L$ of the partial magnified images WPs to be divided to two images is equal to or larger than the longer side length L of the display region, the following conditions have to be satisfied.
[Equation 11]

$$(a^2/2)L \leq L$$

Specifically,

[Equation 12]

$$a^2 \leq 2$$

$$a \leq \sqrt{2}$$

Similarly, when the page image P is magnified by a-fold, the partial magnified image WPs is rotated by 90 degrees relative to the page image P, and then divided into three or four images, the respective aspect ratios have to be equal to the following values or smaller.
[Equation 13]

$$\sqrt{3}$$

$$\sqrt{4} = 2$$

(4) The case in which the page image P is in a vertical writing style-portrait mode or horizontal writing style-landscape mode, and magnified by a magnification scale of $(n_0-1)$-fold or larger and $n_0$-fold or smaller (no is an integer equal to 2 or larger) will be described.

The partial magnified image WPs is divided into $n_0$-number of images. The divided images are combined vertically in a state that the orientation of the characters is maintained, thereby producing a combined image. In this case, the combined image has a height of $n_0H$. Since the combined image cannot be displayed if the $n_0H$ exceeds the shorter side length L of the display panel 2, the display region height H has to satisfy the following conditions.

$$[Equation\ 14]$$
$$n_0H \leq L$$

In this embodiment, since the magnified image WP magnified by a magnification scale of $n_0$-fold has a shorter side length $n_0L$ of 100, the following conditions has to be satisfied.

$$[Equation\ 15]$$
$$H \leq (1/n_0)L$$

Specifically,

$$[Equation\ 16]$$
$$H \leq 100/(n^2)$$

Hereinafter, the uppermost end of an image such as a page image P or a magnified image WP is referred to as a page head, and the lowermost end thereof is referred to as a page end. The vertical and horizontal directions of an image are defined when the image is positioned in an appropriate manner. The page head of the partial magnified image WPs is referred to as a display start position S. Settings can be made for the display start position S as required to change the partial magnified image WPs.

Referring to Fig. 7, a description is given for a magnification display setting table 12c. The magnification display setting table 12c is used to determine how the partial magnified image WPs described with reference to Fig. 5 is to be displayed. Specifically, the magnification display setting table 12c associates each magnification scale with the orientation in which the image magnified by each magnification scale is displayed, and a way how the display region of the display panel 2 is divided. In this embodiment, four kinds of magnification display setting tables 12c are stored according to the page attribute data.

Fig. 7(A) shows a magnification display setting table 12c1 used for the page image P in the vertical-writing style-portrait mode document file. Fig. 7(B) is a magnification display setting table 12c2 used for the page data P in the vertical-writing style-landscape mode document file. Fig. 7(C) is a magnification display setting table 12c3 used for the page data P in the horizontal writing style-portrait mode document file; and Fig. 7(D) is a magnification display setting table 12c4 used for the page image P in the horizontal writing style-landscape mode document file.

In this embodiment, since the page data has a horizontal writing style-portrait mode attribute, the description is given with reference to a magnification display table 12c3 shown in Fig. 7(C). Referring to the magnification display table 12c3, the magnification scale 100% corresponds to vertical orientation for "view orientation". Therefore, when a page image P is magnified by 100%, the page image P is displayed so that the column direction coincides with the longer side direction of the display panel 2. Furthermore, since "not applicable" is indicated for a display panel division method, the page image P is displayed without dividing the display panel 2 (see Fig. 1).

When a page image P is magnified by 133%, since the "view orientation" indicates horizontal orientation, the partial magnified image WPs obtained by magnifying the page image P by 133% is rotated by 90 degrees relative to the page image P, and then displayed so that the line direction coincides with the longer side direction of the display panel 2. Also, since "not applicable" is indicated as the "display panel division method", the partial magnified image WPs is displayed without dividing the display panel 2 (see Fig. 4(B)).

When a page image P is magnified by 200%, since the "view orientation" indicates vertical orientation, the partial magnified image WPs obtained by magnifying by 200% is displayed so that the column direction coincides with the longer side direction of the display panel 2. Since the "display panel division method" indicates "division into two images in the longer side direction", the display panel 2 is divided into two sections vertically in the longer side direction by the division boundary D. The partial magnified image WPs is divided into two images, and the divided images are arranged one above the other (see Fig. 4(C)).

When a page image P is magnified by 266%, the "view orientation" indicates horizontal orientation, the partial magnified image WPs obtained by magnifying the page image P by 266% is rotated by 90 degrees relative to the page image P, and then displayed so that the line direction coincides with the longer side direction of the display panel 2. Since the "display panel division method" indicates "division into two images in the shorter side direction", the display panel 2 is divided into two sections vertically in the shorter side direction by the division boundary D. The partial magnified image WPs is divided into two images, and the divided images are arranged one above the other (see Fig. 4(D)).

In this embodiment, both when the page data has the vertical writing style-portrait mode attribute, and when the page data has the horizontal writing style-landscape mode attribute, the magnification scale is limited to equal to or less than 200%. Even when the user further depresses the magnification key 7c after the magnification scale reaches 200%, the magnification scale remains unchanged.

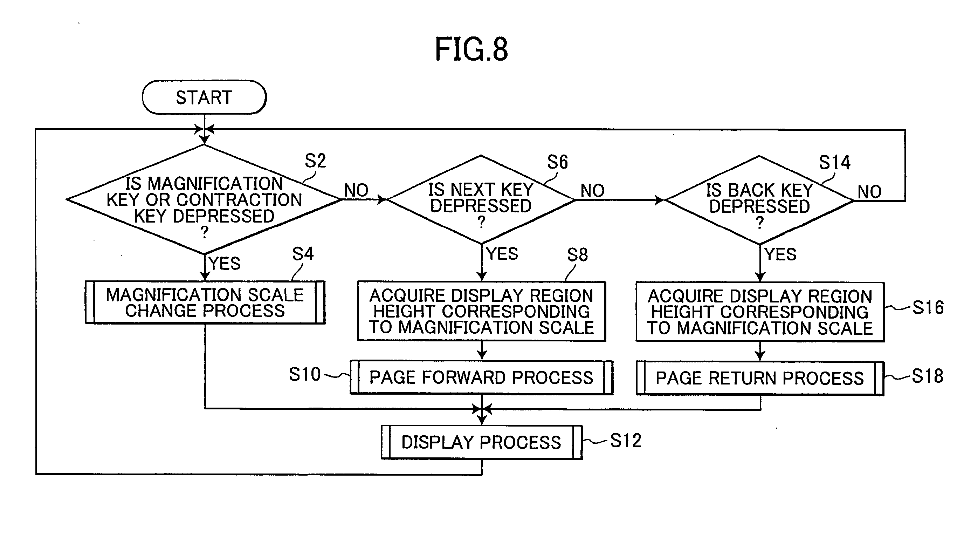

Referring to Fig. 8, a main process to be executed in the display device 1 will be described. The main process is started when the user turns on the power switch of the display device 1. When power is turned on, the CPU 11, for example, reads the page display data of a page number "1" from the memory card 6, expands the page display data in the page data expansion region 13d (see Fig. 2), and displays the page image P of the page number "1" on the display panel 2 based on the page display data.

Next, the CPU 11 determines whether or not the user has depressed either the magnification key 7c or the contraction key 7d (See Fig. 1) (S2). If the user has depressed either the magnification key 7c or the contraction key 7d (S2: Yes), the CPU 11 decides the magnification scale of the image to be displayed on the display panel 2 in a magnification scale change process (S4), and displays the image as a partial magnified image WPs corresponding to the magnification scale on the display panel 2 in a display process (S12).

On the other hand, if the user has depressed neither the magnification key 7c nor the contraction key 7d (S2: No), the CPU 11 then determines whether or not the user has depressed the next key 7b (S6). When the user depresses the next key 7b, the CPU 11 performs a page forward process (S10) on the page image P or the partial magnified image WPs displayed on the display panel 2. The CPU 11 switches to the next page image P in the page forward direction or the partial magnified image WPs on the page end side.

If the user has depressed the next key 7b (S6: Yes), the CPU 11 refers to the display region height table 12b and then acquires the display region height H corresponding to the magnification scale selected by the user (S8). Next, the CPU 11 executes a page forward process to determine the display start position S of the next partial magnified image in the page forward direction (S10). In a display process (S12), the CPU 11 displays the partial magnified image WPs determined based on the display start position S on the display panel 2.

On the other hand, if the user has not depressed the next key 7b (S6: No), the CPU 11 determines whether or not the user has depressed the back key 7d (S14). When the user depresses the back key 7d, the CPU 11 performs a page return process (S18) on the page image P or the partial magnified image WPs displayed on the display panel 2. The CPU 11 switches to the previous page image P or to the partial magnified image WPs on the page head side in the page returning direction. Unless the user has depressed back key 7d (S14: No), the CPU 11 returns to S2.

If the user has depressed the back key 7d (S14: Yes), the CPU 11 refers to the display region height table 12b and then acquires the display region height H corresponding to the magnification scale selected by the user (S16). Next, the CPU 11 executes the page return process to determine the display start position S of the next partial magnified image in the page returning direction (S18). In the display process (S12), the CPU 11 displays the partial magnified image WPs determined based on the display start position S on the display panel 2. The CPU 11 returns to S2 after the display process (S12).

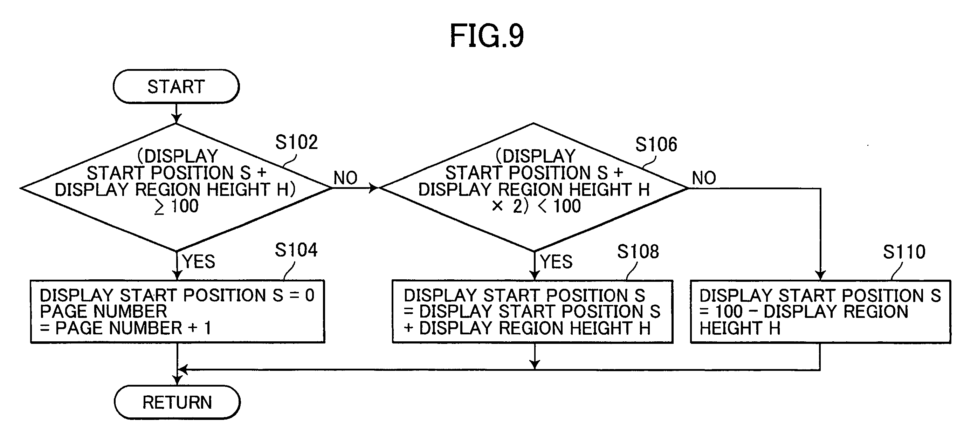

Referring to Fig. 9, the page forward process will be described. In the page forward process, the CPU 11 determines the display start position S of the partial magnified image WPs on the page end side in the page forward direction when the user depresses the next key 7b.

The CPU 11 acquires the display start position S of the page image P or the partial magnified image WPs currently displayed on the display panel 2, from the current-page start memory 13b. The CPU 11 adds the display region height H to the acquired display start position S, and then determines whether or not the value obtained by addition is equal to 100 or larger (S102).

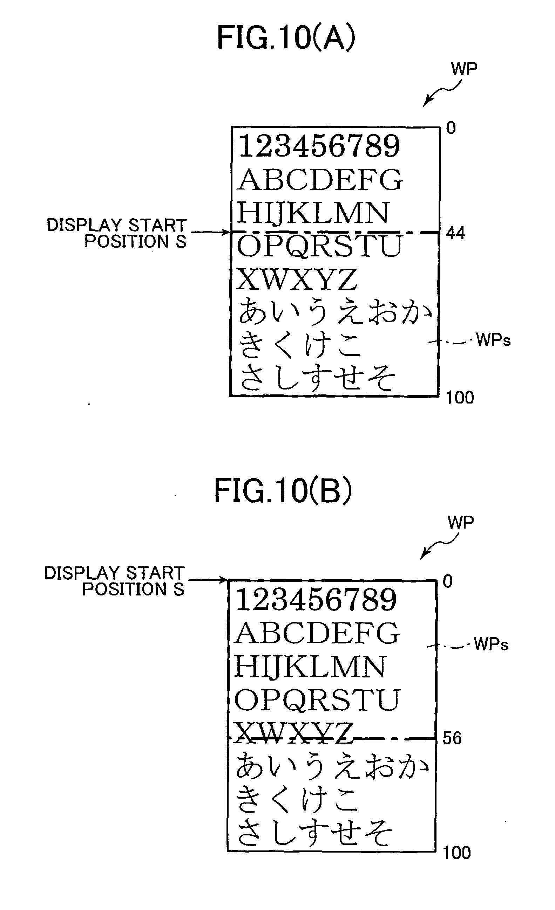

Referring to Fig. 10, the relation between the display start position S and the display region height H will be described. Referring to the display region height table 12b (see Fig. 5(A)), the magnification scale 133% corresponds to the display region height H "56". Therefore, if "44" is employed for the display start position S, the value obtained by adding the display region height H to the display start position S is "100". Specifically, the CPU 11 determines that the partial magnified image WPs covering the range from the display start position S "44" to the page end is displayed on the display panel 2. As a result, the CPU 11 determines that the page display data which is being partially displayed has no undisplayed region on the page end side of the magnified image WP. Therefore, the CPU 11 determines that the next image to be displayed in the page forward direction is the page display data of the next page.

Referring to Fig. 10(B), the partial magnified image WPs obtained by magnifying the page image P by 133% is displayed. The display start position S of the partial magnified image WPs is "0". As shown in Fig. 10(B), when the display start position S is "0", the value obtained by adding the display region height H to the display start position S is "56", which is equal to or smaller than 100. In this case, the CPU 11 determines that the magnified image WP still has the undisplayed region corresponding to the height "44" in the page forward direction. The CPU 11 determines that the partial magnified image WPs to be displayed next in the page forward direction is the region on the page end side within the magnified image WP.

As shown in Fig. 10(B), when the partial magnified image WPs covering the range from the display start position S "0" to the display region height H "56" is displayed on the display panel 2, the value obtained by adding the display region height H x 2 (= 120) to the display start position S is "112", which is which is equal to or larger than 100. Therefore, the CPU 11 determines that the height of the undisplayed region on the page end side is smaller than the display region height H "56".

In this case, as shown in Fig. 10(A), the CPU 11 sets the position "94" obtained by subtracting the display region height H "56" from "100" corresponding to the page end, as the next display start position S. As a result, the CPU 11 then displays the partial magnified image WPs covering the range from the display start position S "44" to the page end on the display panel 2. Consequently, the CPU 11 moves the partial magnified image WPs by such a simpler process without a complicated process to combine the current image on the display panel 2 and a part of the page display data on the next page, thereby displaying the magnified image WP on the display panel 2 as a whole.

Referring again to Fig. 9, if the value obtained by adding the display region height H to the display start position S is 100 or larger (S102: Yes), the CPU 11 determines that the magnified image WP has no undisplayed region on the page end side. The CPU 11 then adds "1" to the page number stored in the page number memory 13a, and sets the display start position S to "0" (S104). As a result, the CPU 11 starts displaying the partial magnified image WPs from the head of the next page in the subsequent display process (S12).

On the other hand, if the value obtained by adding the display region height H to the display start position S is smaller than 100 (S102: No), the CPU 11 determines whether or not the condition expressed by the following (Equation 1) is satisfied (S106).

$$\text{(Equation 1) (Display start position S) + (Display region height H)} \times 2 < 100$$

If (Equation 1) is satisfied (S106: Yes), the CPU 11 updates the display start position S by adding the display region height H to the display start position S stored in the current-page start memory 13b (S108). As a result, in the next display process (S12), the CPU 11 displays the partial magnified image WPs adjacent to the page end side of the partial magnified image WPs currently displayed on the display panel 2.

On the other hand, if (Equation 1) is not satisfied (S106: No), the CPU 11 updates the display start position S by subtracting the display region height H from "100" corresponding to the page end. In the next display process (S12), the CPU 11 starts displaying the partial magnified image WPs from the page end, corresponding to the display region height H.

In the page forward process (S10), the CPU 11 updates the display start position S based on the display region height H preset for each magnification scale so as to shift the display start position S sequentially in the page forward direction. In the display process (S12), the CPU 11 displays the partial magnified image WPs defined by the display start position S on the display panel 2, and then displays the next partial magnified image WPs adjacent to the page end side in the page forward direction.

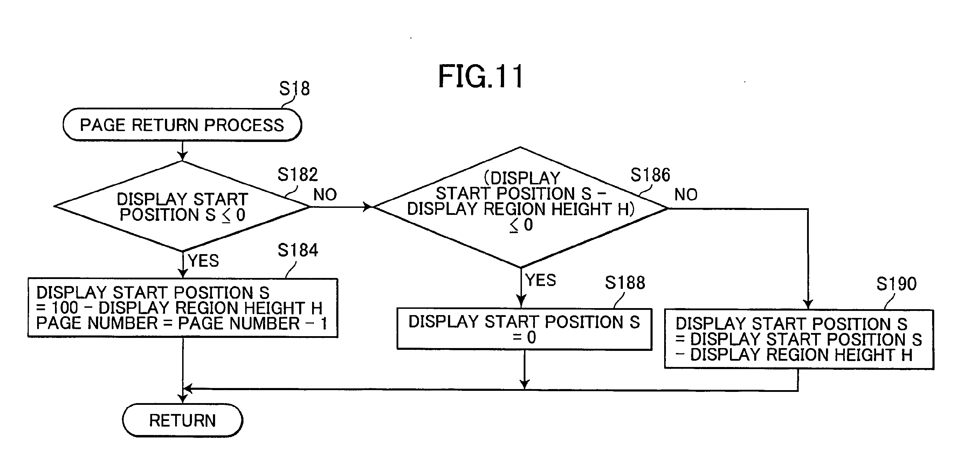

Referring to Fig. 11, the page return process (S18) will be described. In the page return process, the CPU 11 determines the display start position S of the partial magnified image WPs on the page head side in the page returning direction, when the user depresses the back key 7a.

The CPU 11 acquires the display start position S of the partial magnified image WPs currently displayed on the display panel 2, from the current-page start memory 13b. The CPU 11 determines whether or not the display start position S is 0 (page head) or smaller (S182).

If the display start position S is "0" (S182: Yes), the CPU 11 determines that the partial magnified image WPs starting from the page head and corresponding to the display region height H is currently displayed on the display panel 2. Specifically, the CPU 11 determines that the magnified image WP has no undisplayed region on the page head side. Therefore, the CPU 11 determines that the image to be displayed next in the page returning direction is the page display data for the previous page.

The CPU 11 subtracts "1" from the page number stored in the page number memory 13a, and sets the next display start position S by subtracting the display region height H from 100 (S184). In the next display process (S12), the CPU 11 starts displaying the partial magnified image WPs from the end of the previous page and corresponding to the display region height H.

On the other hand, if the display start position S is larger than "0" (S182: No), the CPU 11 determines that the magnified image WP still has an undisplayed region on the page head side of the currently displayed partial magnified image WPs. The CPU 11 next determines whether or not the value obtained by subtracting the display region height H from the display start position S is "0" or smaller (S186). If the value obtained by subtracting the display region height H from the display start position S is larger than 0 (S186: No), the value obtained by subtracting the display region height H from the display start position S is set to the next display start position S (S190). In the next display process (S12), the CPU 11 displays the undisplayed region of the magnified image WP adjacent to the page head side on the display panel 2 as a partial magnified image WPs.

On the other hand, if the value obtained by subtracting the display region height H from the display start position S is "0" or smaller (S186: Yes), the display start position S is set to "0" (S188). In the next display process (S12), the CPU 11 starts displaying the partial magnified image WPs corresponding to the display region height H from the page head on the display panel 2.

A partial magnified image WPs is selected from the magnified image WP in the next display process (S12) by the display start position S determined in the page forward process (S10) or in the page return process (S18). The selected partial magnified image WPs is then displayed on the display panel 2.

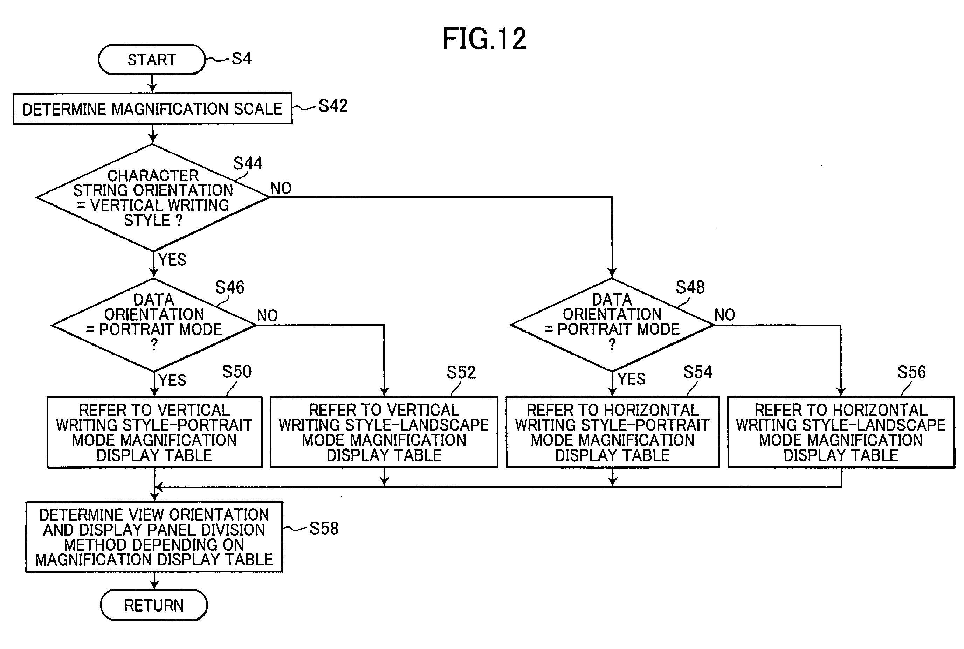

Referring to Fig. 12, a magnification scale change process (S4) will be described. In the magnification scale change process (S4), the magnification scale of the page image P is changed.

The CPU 11 determines each magnification scale, and then stores the determined magnification scale in the current-page scaling memory 13c (S42). In this embodiment, the four magnification scales 100%, 133%, 200%, and 266% are settable in the magnification order for the display device 10. The CPU 11 determines the magnification scale of the image to be displayed next, depending on the magnification scale stored in the current-page scaling memory 13c (magnification scale of the image currently displayed on the display panel 2), and depending on the number of times the user depresses the magnification key 7c or the contraction key 7d.

Next, the CPU 11 refers to the page attribute data of the page display data having the page number stored in the page number memory 13a (page number of the currently displayed image), and then determines whether or not the character string in the page display data is provided in the vertical writing style (S44). Next, the CPU 11 determines whether or not the page display data has been created in the portrait mode (546, S48). The CPU 11 then refers to the magnification display table 12c corresponding to the page attribute data of the page display data currently displayed on the display panel 2. Specifically, if the character string is provided in the vertical writing style (S44: Yes), and the page orientation is based on the portrait mode (S46: Yes) at the same time, the CPU 11 then refers to a vertical writing style-portrait mode magnification display table 12c1 (Fig. 7(A)) (S50). If the character string is provided in the vertical writing style (S44: Yes), and the page orientation is based on the landscape mode (S46: No) at the same time, the CPU 11 refers to a vertical writing style-landscape mode magnification display table 12c2 (Fig. 7(B)) (S52).

On the other had, if the character string is provided in the horizontal writing style (S44: No), and the page orientation is based on the portrait mode (S48: Yes) at the same time, the CPU 11 refers to a horizontal writing style-portrait mode magnification display table 12c3 (Fig. 7(C)) (S54). If the character string is provided in the horizontal writing style (S44: No), and the page orientation is based on the landscape mode (S48: No) at the same time, the CPU 11 refers to a horizontal writing style-landscape mode magnification display table 12c4 (Fig. 7(D)) (S56).

According to the referred magnification display table 12c, the CPU 11 determines the view orientation and the display panel division method (S58). In the next display process (S12), the CPU displays the page image P or the partial magnified image WP on the display panel 2, according to the referred magnification display table 12c.

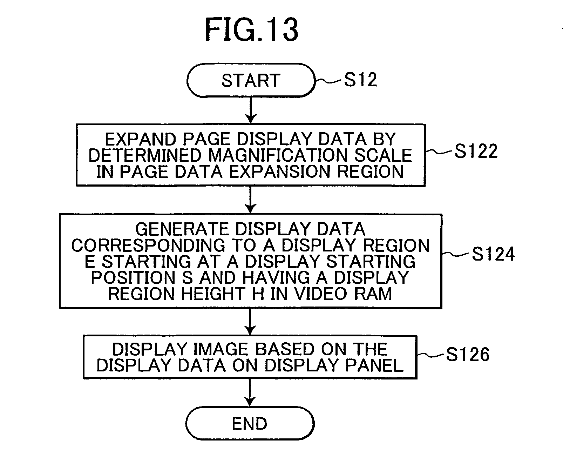

Referring to Fig. 13, a display process (S12) will be described. In the display process, when the change of the magnification scale of the magnified image WP is instructed, or when movement of the image displayed on the display panel 2 is instructed, the CPU 11 displays the image according to the instruction on the display panel 2.

The CPU 11 reads the page display data of the page number stored in the page number memory 13a from the memory card 6, and then expands the read page display data by the magnification scale stored in the current-page scaling memory 13c, in the page data expansion region 13d (see Fig. 3), as a magnified image WP (S122). If the page number and the magnification scale are same as those of the previous display process (S12), the process can be omitted.

Among the page display data expanded in the page data expansion region 13d, the CPU 11 transfers the data equivalent to the partial magnified image WPs starting from the display start position S and corresponding to the display region height H, to the video RAM 13e. The CPU 11 then produces display data corresponding to the partial magnified image WPs, based on the view orientation and the display panel division method determined according to the magnification display table 12c (S124). The CPU 11 then outputs the produced display data to the display panel driver 16 to display the data on the display panel 2 (S126).

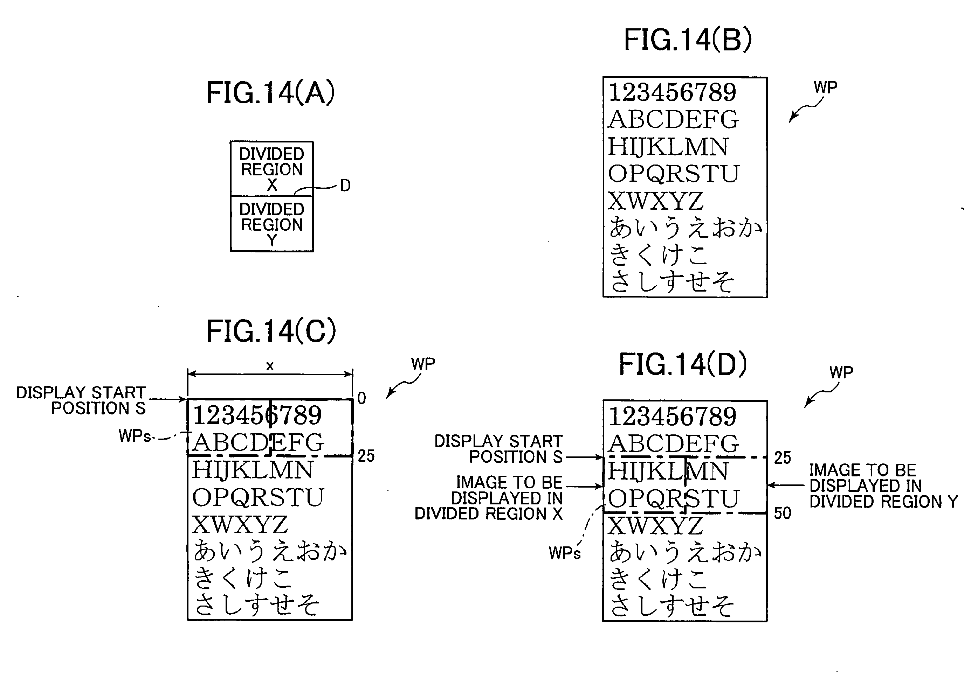

Referring to Fig. 14, a display process (S12) to be executed when the magnification scale is 200% will be described. As shown in Fig. 14(A), when a page image P is magnified by 200%, a division boundary D extending in parallel with the shorter side direction of the display panel 2 is displayed on the display panel 2, so that the display region of the display panel 2 is divided into two regions in the longer side direction, thereby arranging the divided display regions in the longer side direction. Between the two divided display regions, the upper region is referred to as a divided region X, and the lower region is referred to as a divided region Y. As described in Fig. 4(C), the partial magnified image WPs is divided into the divided region X and the divided region Y for display. Fig. 14(B) shows a magnified image WP magnified by 200%. The page display data corresponding to the magnified image WP is expanded in the page data expansion region 13d. Fig. 14(C) shows a partial magnified image WPs when the display start position S is "0".

As shown in Fig. 14(C), the page display data expanded in the page data expansion region 13d is partially transferred to the video RAM 13e so that display data is produced in the video RAM 13e. Regarding the partial magnified image WPs, the half on the line head side (left side in Fig. 14(C)) is displayed in the divided region X of the display panel 2, and the half on the line end side (right side in Fig. 14(C)) is displayed in the divided region Y of the display panel 2.

As shown in Fig. 14(C), when the user depresses the next key 7b after the partial magnified image WPs starting from the display start position S "0" and corresponding to the display region height H "25" is displayed on the display panel 2, the CPU 11 adds the display region height H "25" to the display start position S to update the display start position S. As shown in Fig. 14(D), in the display process (S12), the CPU 11 starts displaying the partial magnified image WPs from the display start position S "25" and corresponding to the display region height H "25" on the display panel 2.

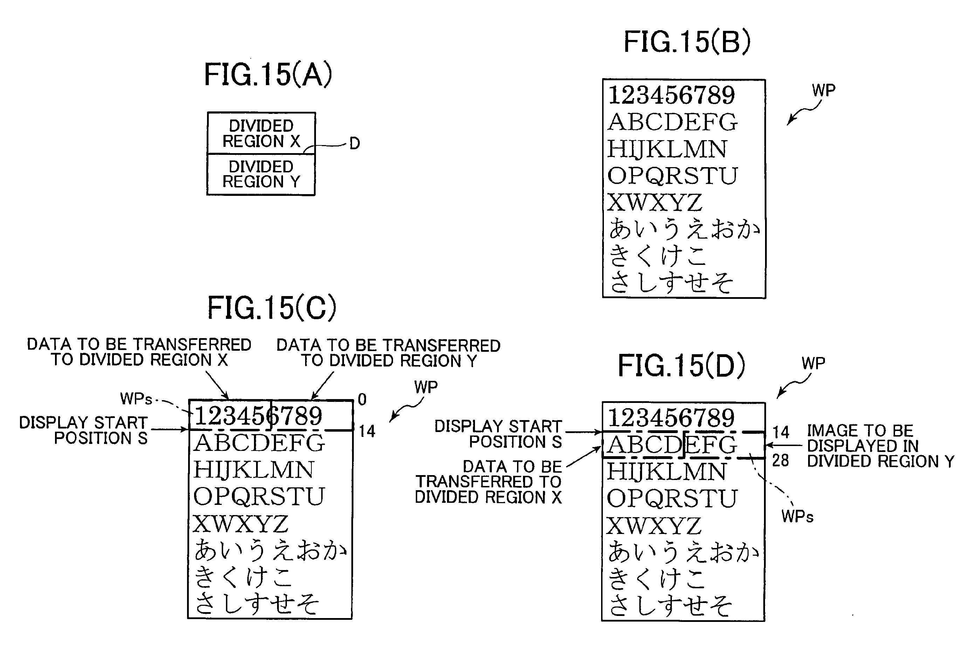

Referring to Fig. 15, a display process (S12) to be executed when the magnification scale is 266% will be described. As shown in Fig. 15 (A) , when a page image P is magnified by 266%, a division boundary D extending in parallel with the longer side direction of the display panel 2 is displayed on the display panel 2, so that the display region of the display panel 2 is divided into two regions in the shorter side direction, thereby arranging the two divided display regions in the shorter side direction. Between the two divided display regions, the upper region is referred to as the divided region X, and the lower region is referred to as the divided region Y. As described in Fig. 4(D), the partial magnified image WPs is divided into the divided region X and the divided region Y for display.

Fig. 15(B) shows a magnified image WP magnified by 266%. The page display data corresponding to the magnified image WP is expanded in the page data expansion region 13d. Fig. 15(C) shows a partial magnified image WPs when the display start position S is "0".

The page display data expanded in the page data expansion region 13d is processed so that display data is produced in the video RAM 13e. As shown in Fig. 15(C), regarding the partial magnified image WPs, the half on the line head side (left side in Fig. 15 (C)) is displayed in the divided region X of the display panel 2, and the half on the line end side (right side in Fig. 13(C)) is displayed in the divided region Y of the display panel 2.

As shown in Fig. 15(C), when the user depresses the next key 7b after the partial magnified image WPs starting from the display start position S "0" and corresponding to the display region height H "14" is displayed on the display panel 2, the CPU 11 adds the display region height H "14" to the display start position S to update the display start position S. As shown in Fig. 15(D), in the display process (SI2), the CPU 11 starts displaying the partial magnified image WPs from the display start position S "14" and corresponding to the display region height H "14" on the display panel 2.

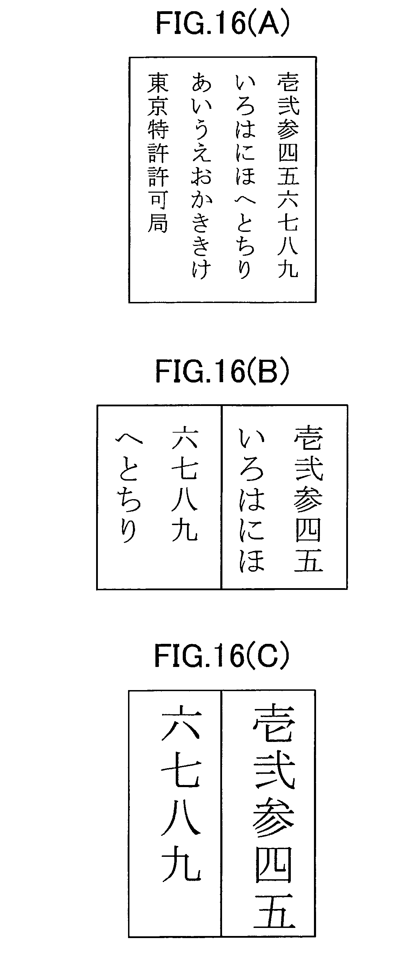

For easier comprehension, the above description is based on the magnification display to be employed when the page image P has the horizontal writing style-portrait mode attribute. Hereinafter, the page display data attributes other than the horizontal writing style-portrait mode attribute are described with reference to Fig. 16 to Fig. 18.

Referring to Fig. 16, a description is given for the case in which the page display data has a vertical writing style-portrait mode attribute. In this case, the partial magnified image WPs is displayed on the display panel 2 based on the magnification display table 12c1 (Fig. 7(A)).

As shown in Fig. 16(B), when a page image P is magnified by 133%, the CPU 11 displays a division boundary D extending in parallel with the shorter side direction of the display panel 2, so as to divide the display panel 2 into two sections in the longer side direction. The character string continuous in the line direction of the partial magnified image WPs is divided into two images. The divided character strings are arranged on the right and left sides of the division boundary D. As shown in Fig. 16(C), when a page image P is magnified by 200%, the CPU 11 displays a division boundary D extending in parallel with the longer side direction of the display panel 2, so as to divide the display panel 2 into two sections in the shorter side direction. The CPU 11 then divides the character string continuous in the line direction of the partial magnified image WPs into two images, and then arranges the divided character strings on the right and left sides of the division boundary D for display. In both cases of 133% magnification and 200% magnification, the character string continuous in the line direction corresponding to one line is displayed on the display panel 2 at one time from the head through the end thereof.

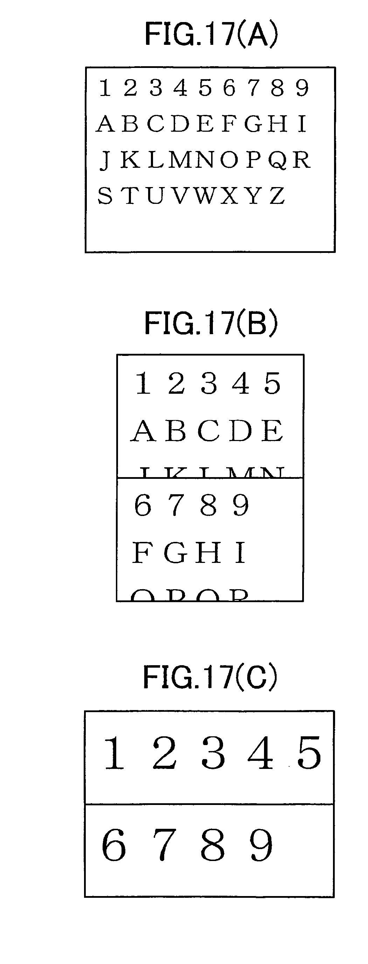

Referring to Fig. 17, a description is given for the case in which the page display data has a horizontal writing style-landscape mode attribute. In this case, the partial magnified image WPs is displayed on the display panel 2 based on the magnification display table 12c4 (Fig. 7(D)).

As shown in Fig. 17(A), if a page image P has been created in the landscape mode, the CPU 11 displays the page image P so that the longer side direction of the page image P coincides with the longer side direction of the display panel 2. Specifically, the display panel 2 is used in the landscape mode.

As shown in Fig. 17(B), when the page image P is magnified by 133%, the CPU 11 displays a division boundary D extending in parallel with the shorter side direction of the display panel 2, so as to divide the display panel 2 into two sections in the longer side direction. The CPU 11 divides the partial magnified image WPs into two images in the line direction, and then arranges the divided partial magnified images above and below the division boundary D for display. As shown in Fig. 17(C), when a page image P is magnified by 200%, the CPU 11 displays a division boundary D extending in parallel with the longer side direction of the display panel 2, so as to divide the display region of the display panel 2 into two regions in the shorter side direction. The CPU 11 further divides the partial magnified image WPs into two images in the line direction, so as to arrange the divided partial magnified images above and below the division boundary D for display. In both cases of 133% display and 200% display, the CPU 11 displays the character string corresponding to one line of the magnified image WP on the display panel 2 at one time from the head through the end thereof.

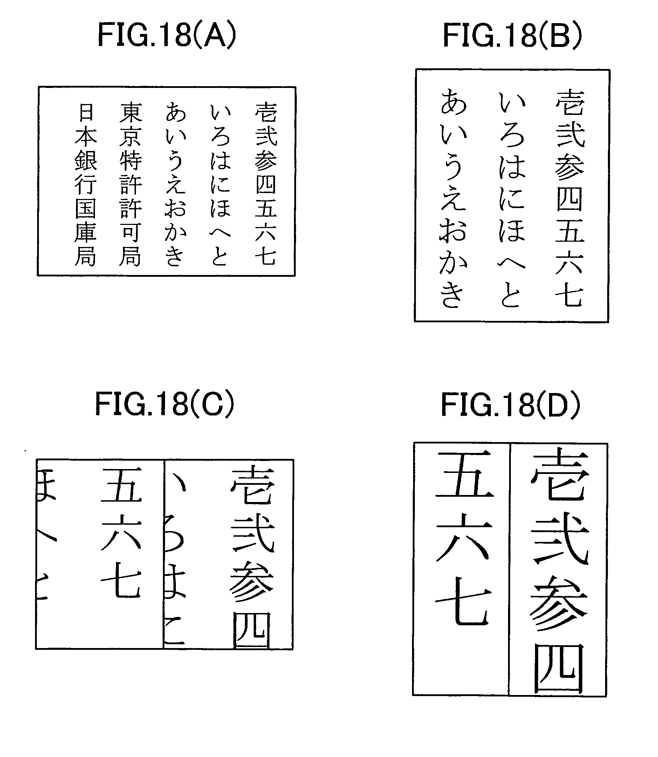

Referring to Fig. 18, a description is given for the case in which the page display data of a page image P has a vertical writing style-landscape mode attribute. In this case, the partial magnified image WPs is displayed on the display panel 2 based on the magnification display table 12c2 (Fig. 7(B)).

As shown in Fig. 18 (A) , if the page image P has been created in the landscape mode, the CPU 11 displays the page image P so that the longer side direction of the page image P coincides with the longer side direction of the display panel 2. Specifically, the display panel 2 is used in the landscape mode.

As shown in Fig. 18(B), when the page image P is magnified by 133%, the CPU 11 rotates the partial magnified image WPs by 90 degrees relative to the page image P for display so that the line direction of the partial magnified image WPs coincides with the longer side direction of the display panel 2. As shown in Fig. 18(C), when the page image P is magnified by 200%, the CPU 11 displays a division boundary D extending in parallel with the shorter side direction of the display panel 2, so as to divide the display panel 2 into two sections in the longer side direction. The CPU 11 then divides the partial magnified image WPs into two images in the line direction, and then arranges the divided partial magnified images on the right and left sides of the division boundary D for display. As shown in Fig. 18 (D) , when the page image P is magnified by 200%, the CPU 11 displays a division boundary D extending in parallel with the longer side direction of the display panel 2, so as to divide the display panel 2 into two sections in the shorter side direction. The CPU 11 then divides the partial magnified image WPs into two images in the line direction, and then arranges the divided partial magnified images on the right and left sides of the division boundary D for display. In all the cases of 133% display, 200% display, and 266% display, the character string corresponding to one line is displayed on the display panel 2 at one time from the head through the end thereof.

According to the display device 1 of this embodiment, even when a page image P is magnified, the character string corresponding to one line of the page image P can be displayed on the display panel 2 at the same time from the head through the end thereof. These operation reduces operational complexity when the text obtained by magnifying the page image P processed from a document file is read.

The display panel 2 according to the first embodiment has been described on the precondition that the aspect ratio (longer side length/shorter side length) thereof is 1.33. Therefore, if the line direction of the page image P to be displayed on the display panel 2 coincides with the shorter side direction of the display panel 2 (in this embodiment, the page image P is the horizontal writing style-portrait mode document, or the vertical writing style-landscape mode document), and the page image P is magnified by 133%, the partial magnified image WPs is rotated by 90 degrees relative to the page image P so that the line direction of the partial magnified image WPs coincides with the longer side direction of the display panel 2. The partial magnified image WPs is thus displayed on the display panel 2. Specifically, the length of the line direction of the magnified image magnified by 133% is equal to the length of the longer side of the display panel 2. Therefore, the longer side direction of the display panel 2 can be utilized by rotating the partial magnified image WPs by 90 degrees relative to the page image P. As a result, the character string corresponding to one line is displayed on the display panel 2 at the same time from the head through the end thereof.

Whenever the page image P is magnified by 200% regardless of the attribute of the page image P, the physical length x of the partial magnified image WPs in the line direction (= line direction length of the page image P x 2) is equal to or larger than the length of the display panel 2 in the longer side direction. This means that the character string corresponding to one line of the partial magnified image WPs partially extends off the display panel 2 even when the partial magnified image WPs is rotated by 90 degrees relative to the page image P. Therefore, the partial magnified image WPs is divided into two images in the line direction so that the divided images are arranged one above the other for display. This simple operation enables the character string corresponding to one line to be displayed on the display panel 2 at the same time from the head through the end.

If the line direction of the page image P to be displayed on the display panel 2 coincides with the shorter side direction of the display panel 2 (in this embodiment, the page image P is in the horizontal writing style-portrait mode, or the vertical writing style-landscape mode), and the page image P is magnified by 266%, the partial magnified image WPs is divided into two images in the line direction so that the divided images are arranged one above the other. At the same time, the partial magnified image WPs is rotated by 90 degrees relative to the page image P so that the line direction of the partial magnified image WPs coincides with the longer side direction of the display panel 2. The divided partial magnified images WPs are combined and displayed on the display panel 2. Therefore, the longer side direction of the display panel 2 can be used effectively.

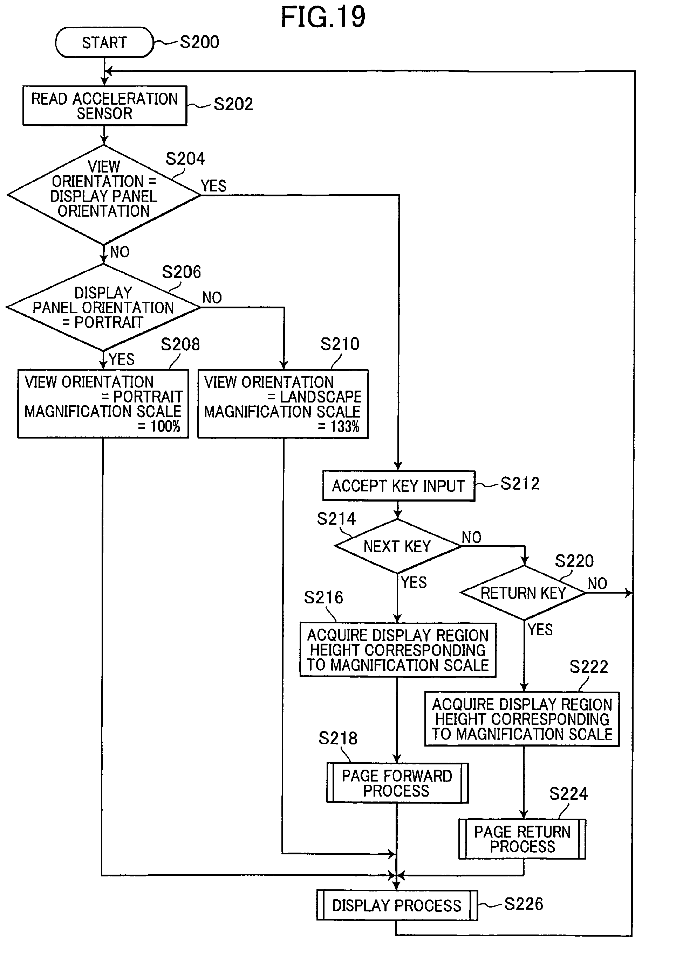

Referring next to Fig. 19, the operation of the display device 1 will be described. In the above-described main control of the first embodiment, the CPU 11 changes the magnification scale of the magnified image WP when the user depresses the magnification key 7c or the contraction key 7d. On the other hand, in a main process of a second embodiment, the acceleration sensor 14 (see Fig. 2) detects the change in the orientation of the display panel 2 relative to the user. The CPU 11 then changes the magnification scale of the magnified image WP based on the result detected by the acceleration sensor 14.

For easier comprehension, while the CPU 11 is executing the main process according to the second embodiment, the input to the magnification key 7c or to the contraction key 7d is disabled, and the image magnified only by either 100% or 133% is displayed on the display panel 2. The page image P has the horizontal writing style-portrait mode attribute.

In the main process according to the second embodiment, first, the CPU 11 reads the acceleration (acceleration of gravity) detected by the acceleration sensor 14 (S202). The acceleration detected by the acceleration sensor 14 enables the CPU 11 to confirm how much the display device 1 is inclined relative to the vertical direction. Therefore, based on the detected acceleration, the CPU 11 determines in which way the longer side of the display panel 2 is oriented vertically (hereinafter, referred to as portrait orientation) or horizontally (hereinafter, referred to as landscape orientation).

Next, the CPU 11 determines whether or not the orientation of the display panel 2 coincides with the view orientation (S204). A description is given based on the precondition that the display panel 2 is in the portrait orientation, and on the precondition that a page image P magnified by 100% is displayed thereon. In this case, the page image P is in the portrait orientation for display (see magnification display table 12c3 in Fig. 7(C)). Since the orientation of the display panel 2 coincides with the view orientation (S204: Yes), the CPU 11 now accepts key input (S212).

When the user depresses the next key 7b (S214: Yes), the CPU 11 acquires the display region height H corresponding to the magnification scale (S216), executes a page forward process (S218), and then executes a display process (S226). As a result, the next image in the page forward direction is displayed on the display panel 2. The page forward process (S218) is the same as the page forward process (S10) described with reference to Fig. 9. The display process (S226) is the same as the display process (S12) described with reference to Fig. 13. Therefore, the detailed description thereof is omitted here.

On the other hand, when the user depresses the back key 7a (S220: Yes), the CPU 11 acquires the display region height H corresponding to the magnification scale (S222), executes a page return process (S224), and then executes the display process (S226). As a result, the next image in the page returning direction is displayed on the display panel 2. The page return process (S224) is the same as the page return process (S18) described with reference to Fig. 11, so the detailed description thereof is omitted here.

While these processes are being repeated, the user happens to rotate the display device 1 so that the display panel 2 becomes in the landscape orientation. If the display panel 2 is changed from the portrait orientation to the landscape orientation, the view orientation does not coincide with the orientation of the display panel 2 (S204: No). Next, the CPU 11 determines whether or not the display panel 2 is in the portrait orientation (S206). If the display device 1 is in the portrait orientation (S206: Yes), the CPU 11 sets the view orientation to the portrait orientation, and sets the magnification scale to be stored in the current-page scaling memory 13c to 100% (S208). As a result, in the display process (S226), the CPU 11 displays the page image P magnified by 100% in the portrait orientation on the display panel 2 which is used in the portrait orientation.

On the other hand, if the display panel 2 is used in the landscape orientation (S206: No), the CPU 11 sets the view orientation to the landscape orientation, and sets the magnification scale to be stored in the current-page scaling memory 13c to 133% (S210). As a result, in the display process (S226), the CPU 11 displays the page image P magnified by 133% on the display panel 2 which is used in the landscape orientation.

In the main process (S200) according to the second embodiment, the user simply changes the orientation of the display panel 2, thereby switching the magnification scale of the page image P between 100% and 133% for display. Even when the page image P is magnified by 133%, the character string corresponding to one line is displayed on the display panel 2 at one time from the head through the end thereof. This improves visibility by image magnification, and requires less operational complexity at the same time.

It is understood that the foregoing description and accompanying drawings have described the present invention. The present invention is not restricted to the disclosed embodiments. Various modifications will become apparent to those skilled in the art without departing from the scope of the present invention.

The foregoing embodiments have been described on the precondition that the display panel 2 consists of an electrophoretic panel. However, the display panel 2 is not restricted to the electrophoretic panel but any other types of panels such as a liquid crystal panel.

In the foregoing embodiments, the magnification scale has been selected from 133%, 200%, and 266%. These values are decided based on the aspect ratio (1.33) of a typical display panel. Therefore, if the aspect ratio of the display panel 2 is changed, these magnification scales are also changed as required.

Each magnification scale does not have to be fixed. An arbitrary value can be set for the magnification scale by the user. In this case, the CPU 11 compares the magnification scale preset based on the aspect ratio of the display panel 2 with the arbitrary magnification scale set by the user, and then refers to the most suitable magnification display tables 12c.

In the foregoing embodiments, the CPU 11 acquires the attribute of the page image P by referring to the page attribute data stored in the memory card 6. However, the CPU 11 can also determine the attribute of the page image P by analyzing the loaded page display data. If the CPU 11 determines the attribute in this manner, the present invention is applicable to the case in which the page attribute data does not contain one of horizontal writing style/vertical writing style information and portrait mode/landscape mode information.

In the foregoing embodiments, the page image P has been processed from a document file. However, the present invention is also applicable to the page image P which has been processed from a non-document file. This is because the user sometimes needs to display a non-document file such as a graph or a table in a predetermined direction at the same time.

In the foregoing embodiments, the division boundary D for dividing the display region of the display panel 2 is displayed. The displayed division boundary D makes the arrangement of the divided partial magnified images WPs easily viewable, thereby improving visibility. However, the divided partial magnified image WPs can be displayed without displaying the division boundary D.

Industrial Applicability

The present invention is applicable to a display device including a display panel for displaying an image, such as a personal computer, a PDA, and a mobile phone.

**Claims**

**1.** A display device (1), comprising:

a display panel (2) having a rectangular display region with a first area, and having a longer side and a shorter side with an aspect ratio of a (a > 1);
a reading means (15) for reading a rectangular original image; and
a control means (10) for controlling display of the original image on the display panel, wherein
the control means (10) includes:
magnified-image producing means (11) for magnifying the original image by a predetermined scale to produce a magnified image;
image defining means (11) for dividing the magnified image by a divisional line extending in parallel with either one of a longer side direction and a shorter side direction, to define a partial magnified image having a predetermined width and an area equal to or less than the first area; and
display control means (11, 16) for displaying a whole of the partial magnified image in the display region.

**2.** The display device (1) as claimed in claim 1, wherein, if the predetermined scale is larger than one-fold, and equal to or less than a-fold,
the image defining means (11) divides the magnified image by the divisional line extending in parallel with the shorter side direction to define the partial magnified image having a width equal to or less than $1/(a^2)$ of a total width of the magnified image, and
the display control means rotates the partial magnified image by 90 degrees to produce the display image, thereby displaying the display image in the display region.

**3.** The display device (1) as claimed in claim 1, wherein, if the predetermined scale is larger than a-fold, and equal to or less than n-fold (n is an integer equal to or more than 2),
the image defining means (11) divides the magnified image by a first divisional line extending in parallel with the shorter side direction to define the partial magnified image having a width equal to or less than $1/(n^2)$ of a total width thereof, and

the display control means divides the partial magnified image into n-number of provisional images by a second divisional line extending in parallel with the longer side direction, arranges and combines the n-number of provisional images in order in the longer side direction, thereby displaying combined images in the display region.

4. The display device (1) as claimed in claim 1, wherein, if the predetermined scale is larger than n-fold, and equal to or less than $(a \cdot n)$-fold (n is an integer equal to or more than 2),

the image defining means (11) divides the magnified image by a first divisional line extending in parallel with the shorter side direction to define the partial magnified image having a width equal to or less than $1/((a \cdot n)^2)$ of a total width thereof, and

the display control means divides the partial magnified image into n-number of provisional images by a second divisional line extending in parallel with the longer side direction, arranges and combines the n-number of provisional images in order in the longer side direction, rotates the combined images by 90 degrees, thereby displaying the combined and rotated images in the display region.

5. The display device (1) as claimed in claim 1, wherein, if n is an integer equal to or more than 1, and the predetermined scale is larger than n-fold and equal to or less than a.n-fold,

the image defining means (11) divides the magnified image by a first divisional line extending in parallel with the longer side direction to define the partial magnified image having a width equal to or less than $1/((2n)^2)$ of a total width thereof, and

the display control means divides the partial magnified image into n-number of provisional images by a second divisional line extending in parallel with the shorter side direction, arranges and combines the n-number of provisional images in order in the shorter side direction, and rotates the combined images by 90 degrees, thereby displaying the rotated and combined images in the display region.

6. The display device (1) as claimed in claim 1, wherein, if n is an integer equal to or more than 2, and the predetermined scale is larger than (n-1)-fold and equal to or less than n-fold,

the image defining means (11) divides the magnified image by a first divisional line extending in parallel with the longer side direction to define the partial magnified image having a width equal to or less than $1/(n^2)$ of a total width thereof, and

the display control means divides the partial magnified image into n-number of provisional images by a second divisional line extending in parallel with the shorter side direction, and arranges and combines the n-number of provisional images in order in the shorter side direction, thereby displaying the combined images in the display region.

7. A device (1) comprising:

   display means (2) having a rectangular data display region;
   reading means (15) for reading original image data corresponding to a rectangular original image;
   magnified-image producing means (11) for producing magnified image data from the original image data according to a magnification scale inputted by a user for displaying magnified image which is magnified with the original image; and
   control means (10) for outputting at least a part of the magnified image data or the original image data to the display means and displaying either the at least a part of the magnified image or the original image in the data display region, **characterized by** further comprising:
   image determination means (11) for dividing the magnified image in a first direction to define a partial magnified image having a predetermined width, the first direction being either one of a longitudinal direction and a lateral direction, wherein
   the partial magnified image includes a range from one end through the other end in a second direction orthogonal to the first direction, and has an area equal to or less than an area of the data display region, and
   the control means outputs a part of the magnified image data corresponding to the partial magnified image to the display means, thereby displaying the partial magnified image in the data display region as a whole.

8. The display device (1) as claimed in claim 7, wherein, if a second direction of the original image to be displayed in the data display region coincides with a shorter side direction of the data display region, the control means (10) rotates the partial magnified image by 90 degrees relative to the original image so that the second direction of the partial magnified image coincides with a longer side direction of the data display region, and displays the partial magnified image in the data display region.

9. The display device (1) as claimed in claim 8, wherein, if a physical length of the partial magnified image in the second direction is larger than a length of the data display region in the shorter side direction and smaller than a length thereof in the longer side direction, the control means (10) rotates the partial magnified image by 90 degrees relative to the original image to coincide the second direction of the partial magnified image with the longer side direction of the data display region, and displays the partial magnified image in the data display region.

10. The display device (1) as claimed in claim 7, further comprising division means for dividing the data display region into n-number of divided display regions (n is an integer equal to or more that 2), wherein
the control means (10) divides the partial magnified image into n-number of auxiliary images in the second direction, allocates the n-number of auxiliary images sequentially to the divided display regions, and displays the partial magnified image as a whole.

11. The display device (1) as claimed in claim 10, wherein, if the second direction of the original image coincides with a shorter side direction of the data display region and a physical length of the partial magnified image in the second direction is equal to or less than a value obtained by multiplying n-fold of a length of the data display region in the shorter side direction, the division means arranges the n-number of divided display regions in a longer side direction of the data display region.

12. The display device (1) as claimed in claim 10, wherein if a physical length of the partial magnified image in the second direction is larger than a value obtained by multiplying n-fold of a length of the data display region in the shorter side direction thereof, the division means divides the data display region into n-number of divided display regions to be arranged in the shorter side direction,
the control means divides the partial magnified image into n-number of auxiliary images in the second direction; allocates the n-number of auxiliary images to respective n-number of divided regions for display and rotates each of the n-number of auxiliary images by 90 degrees relative to the original image to coincide the second direction with the longer side direction of the data display region, and displays the partial magnified image in the data display region as a whole.

13. The display device (1) as claimed in any one of claims 7 to 12, wherein if the original image is a vertical-writing style document having a line including a character or a symbol arranged vertically, the image determination means (11) determines the partial magnified image with a lateral direction of the original image regarding as the first direction, and if the original image is a horizontal-writing style document having a line including a character or a symbol arranged laterally, the image determination means (11) determines the partial magnified image with a vertical direction of the original image regarding as the first direction.

14. The display device (1) as claimed in claim 13,
wherein the original image data includes document data for specifying whether the original image is the vertical-writing style document or the horizontal-writing style document, and
the image determination means defines the partial magnified image including a range from one end through the other end of the magnified image in the second direction, referring to the document data.

15. The display device (1) as claimed in claim 13, further comprising a document determination means for analyzing the original image data to determine whether the original image is the vertical-writing style document or the horizontal-writing style document, wherein
the image determination means defines the partial magnified image including from one end through the other end of the magnified image in the second direction, based on a determination by the document determination means.

16. The display device (1) as claimed in claim 7, further comprising: detection means for detecting orientation of the data display region with respect to the user, wherein if the detection means detects that the orientation has been changed, the magnified-image producing means produces the magnified image data based on the original image data,
the image determination means defines the partial magnified image including from one end through the other end of the magnified image in the second direction and having an area equal to or less than the area of the data display region, and
the control means rotates the partial magnified image by 90 degrees relative to the original image to coincide the second direction of the partial magnified image with a longer side direction of the data display region, and displays the partial magnified image in the data display region.

# FIG.1

123456789
ABCDEFG
HIJKLMN
OPQRSTU
XWXYZ
あいうえおか
きくけこ
さしすせそ

MAGNIFICATION

BACK

CONTRACTION

NEXT

# FIG.2

KEYS —7

KEY I/F —17

11— CPU

16
DISPLAY PANEL DRIVER

DISPLAY PANEL —2

3

ROM —12
- DISPLAY CONTROL PROGRAM ···12a
- DISPLAY REGION HEIGHT TABLE ···12b
- MAGNIFICATION DISPLAY TABLE ···12c

RAM —13
- PAGE NUMBER MEMORY ···13a
- CURRENT-PAGE START MEMORY ···13b
- CURRENT-PAGE SCALING MEMORY ···13c
- PAGE DATA EXPANSION REGION ···13d
- VIDEO RAM ···13e

ACCELERATION SENSOR —14

MEMORY CARD I/F —15

MEMORY CARD —6
- PAGE 1 ATTRIBUTE DATA / PAGE 1 DISPLAY DATA ···6-1
- PAGE 2 ATTRIBUTE DATA / PAGE 2 DISPLAY DATA ···6-2
- PAGE n ATTRIBUTE DATA / PAGE n DISPLAY DATA ···6-n

EP 1 978 507 A1

EP 1 978 507 A1

FIG.3

1 2 3 4 5 6 7 8 9
A B C D E F G H I
J K L M N O P Q R
S T U V W X Y Z

7a

7d

7c

7b

1

2

24

## FIG.4(A)

## FIG.4(B)

## FIG.4(C)

## FIG.4(D)

# FIG.5(A)

| MAGNIFICATION SCALE | DISPLAY REGION HEIGHT H |
|---|---|
| 100% | 100 |
| 133% | 56 |
| 200% | 25 |
| 266% | 14 |

# FIG.5(B)

```
123456789    P
ABCDEFG
HIJKLMN     } H=100
OPQRSTU
XWXYZ
あいうえおか
きくけこ
さしすせそ
```

# FIG.5(C)

DISPLAY REGION HEIGHT S     WPs     WP

```
123456789
ABCDEFG
HIJKLMN    } H=56
OPQRSTU
XWXYZ
あいうえおか
きくけこ
さしすせそ
```

# FIG.5(D)

DISPLAY REGION HEIGHT S     WP     WPs

```
123456789
ABCDEFG   } H=25
HIJKLMN
OPQRSTU
XWXYZ
あいうえおか
きくけこ
さしすせそ
```

# FIG.5(E)

DISPLAY REGION HEIGHT S     WP     WPs

```
123456789   } H=14
ABCDEFG
HIJKLMN
OPQRSTU
XWXYZ
あいうえおか
きくけこ
さしすせそ
```

# FIG.6

# FIG.7(A)

|  | MAGNIFICATION SCALE : 100% | MAGNIFICATION SCALE : 133% | MAGNIFICATION SCALE : 200% |
|---|---|---|---|
| VIEW ORIENTATION | PORTRAIT | LANDSCAPE | PORTRAIT |
| DISPLAY PANEL DIVISION METHOD | NOT APPLICABLE | DIVISION INTO TWO REGIONS IN LONGER SIDE DIRECTION | DIVISION INTO TWO REGIONS IN SHORTER SIDE DIRECTION |

12c1

FIG.7(B)

| | MAGNIFICATION SCALE : 100% | MAGNIFICATION SCALE : 133% | MAGNIFICATION SCALE : 200% | MAGNIFICATION SCALE : 266% |
|---|---|---|---|---|
| VIEW ORIENTATION | LANDSCAPE | PORTRAIT | LANDSCAPE | PORTRAIT |
| DISPLAY PANEL DIVISION METHOD | NOT APPLICABLE | NOT APPLICABLE | DIVISION INTO TWO REGIONS IN LONGER SIDE DIRECTION | DIVISION INTO TWO REGIONS IN SHORTER SIDE DIRECTION |

12c2

FIG.7(C)

| | MAGNIFICATION SCALE : 100% | MAGNIFICATION SCALE : 133% | MAGNIFICATION SCALE : 200% | MAGNIFICATION SCALE : 266% |
|---|---|---|---|---|
| VIEW ORIENTATION | PORTRAIT | LANDSCAPE | PORTRAIT | PORTRAIT |
| DISPLAY PANEL DIVISION METHOD | NOT APPLICABLE | NOT APPLICABLE | DIVISION INTO TWO REGIONS IN LONGER SIDE DIRECTION | DIVISION INTO TWO REGIONS IN SHORTER SIDE DIRECTION |

12c3

FIG.7(D)

| | MAGNIFICATION SCALE : 100% | MAGNIFICATION SCALE : 133% | MAGNIFICATION SCALE : 200% |
|---|---|---|---|
| VIEW ORIENTATION | LANDSCAPE | PORTRAIT | LANDSCAPE |
| DISPLAY PANEL DIVISION METHOD | NOT APPLICABLE | DIVISION INTO TWO REGIONS IN LONGER SIDE DIRECTION | DIVISION INTO TWO REGIONS IN SHORTER SIDE DIRECTION |

12c4

EP 1 978 507 A1

# FIG.8

START

S2 — IS MAGNIFICATION KEY OR CONTRACTION KEY DEPRESSED ? → NO

S6 — IS NEXT KEY DEPRESSED ? → NO

S14 — IS BACK KEY DEPRESSED ? → NO

YES ↓ S4 — MAGNIFICATION SCALE CHANGE PROCESS

YES ↓ S8 — ACQUIRE DISPLAY REGION HEIGHT CORRESPONDING TO MAGNIFICATION SCALE

YES ↓ S16 — ACQUIRE DISPLAY REGION HEIGHT CORRESPONDING TO MAGNIFICATION SCALE

S10 — PAGE FORWARD PROCESS

S18 — PAGE RETURN PROCESS

DISPLAY PROCESS — S12

EP 1 978 507 A1

# FIG.9

EP 1 978 507 A1

# FIG.10(A)

```
WP

        ┌─────────────┐ 0
        │ 123456789   │
        │ ABCDEFG     │
        │ HIJKLMN     │
DISPLAY │─OPQRSTU─────┤ 44
START   │ XWXYZ       │
POSITION S│ あいうえおか │
        │ きくけこ     │─ WPs
        │ さしすせそ   │
        └─────────────┘ 100
```

# FIG.10(B)

```
WP

DISPLAY  ┌─────────────┐ 0
START    │ 123456789   │
POSITION S│ ABCDEFG     │─ WPs
        │ HIJKLMN     │
        │ OPQRSTU     │
        │─XWXYZ───────┤ 56
        │ あいうえおか │
        │ きくけこ     │
        │ さしすせそ   │
        └─────────────┘ 100
```

# FIG.11

```
                    S18
           ┌─────────────────────┐
           │ PAGE RETURN PROCESS │
           └─────────────────────┘
                     │
                     ▼
              ╱─────────────╲  S182
             ╱ DISPLAY START ╲───── NO ────┐
             ╲ POSITION S ≤ 0 ╱            │
              ╲─────────────╱              │
                     │ YES                 │
                     ▼                      ▼
```

**S182** DISPLAY START POSITION S ≤ 0 → NO

**S186** (DISPLAY START POSITION S − DISPLAY REGION HEIGHT H) ≤ 0 → NO

S184
DISPLAY START POSITION S
= 100 − DISPLAY REGION HEIGHT H
PAGE NUMBER = PAGE NUMBER − 1

S188 (YES)
DISPLAY START POSITION S
= 0

S190 (NO)
DISPLAY START POSITION S
= DISPLAY START POSITION S
− DISPLAY REGION HEIGHT H

RETURN

# FIG.12

START —S4

↓

DETERMINE MAGNIFICATION SCALE —S42

↓

CHARACTER STRING ORIENTATION = VERTICAL WRITING STYLE ? —S44

NO → (to S48 branch)

YES ↓

DATA ORIENTATION = PORTRAIT MODE ? —S46

NO → S52

YES ↓ S50

DATA ORIENTATION = PORTRAIT MODE ? —S48

NO → S56

YES ↓ S54

REFER TO VERTICAL WRITING STYLE-PORTRAIT MODE MAGNIFICATION DISPLAY TABLE —S50

REFER TO VERTICAL WRITING STYLE-LANDSCAPE MODE MAGNIFICATION DISPLAY TABLE —S52

REFER TO HORIZONTAL WRITING STYLE-PORTRAIT MODE MAGNIFICATION DISPLAY TABLE —S54

REFER TO HORIZONTAL WRITING STYLE-LANDSCAPE MODE MAGNIFICATION DISPLAY TABLE —S56

↓

DETERMINE VIEW ORIENTATION AND DISPLAY PANEL DIVISION METHOD DEPENDING ON MAGNIFICATION DISPLAY TABLE —S58

↓

RETURN

EP 1 978 507 A1

# FIG.13

```
                    START            S12

        EXPAND PAGE DISPLAY DATA BY
        DETERMINED MAGNIFICATION SCALE     S122
        IN PAGE DATA EXPANSION REGION

            GENERATE DISPLAY DATA
        CORRESPONDING TO A DISPLAY REGION
        E STARTING AT A DISPLAY STARTING    S124
        POSITION S AND HAVING A DISPLAY
        REGION HEIGHT H IN VIDEO RAM

        DISPLAY IMAGE BASED ON THE
        DISPLAY DATA ON DISPLAY PANEL       S126

                    END
```

## FIG.14(A)

DIVIDED REGION X
— D
DIVIDED REGION Y

## FIG.14(B)

123456789
ABCDEFG
HIJKLMN
OPQRSTU
XWXYZ
あいうえおか
きくけこ
さしすせそ

WP

## FIG.14(C)

x

DISPLAY START POSITION S
WPs

123456789
ABCDEFG
HIJKLMN
OPQRSTU
XWXYZ
あいうえおか
きくけこ
さしすせそ

0
25

WP

## FIG.14(D)

DISPLAY START POSITION S
IMAGE TO BE DISPLAYED IN DIVIDED REGION X
WPs

123456789
ABCDEFG
HIJKLMN
OPQRSTU
XWXYZ
あいうえおか
きくけこ
さしすせそ

25
50

IMAGE TO BE DISPLAYED IN DIVIDED REGION Y

WP

EP 1 978 507 A1

## FIG.15(A)

| DIVIDED REGION X |
|---|
| DIVIDED REGION Y |

D

## FIG.15(B)

WP

```
123456789
ABCDEFG
HIJKLMN
OPQRSTU
XWXYZ
あいうえおか
きくけこ
さしすせそ
```

## FIG.15(C)

DATA TO BE TRANSFERRED TO DIVIDED REGION X    DATA TO BE TRANSFERRED TO DIVIDED REGION Y

WPs

DISPLAY START POSITION S

WP

```
123456789    0
ABCDEFG      14
HIJKLMN
OPQRSTU
XWXYZ
あいうえおか
きくけこ
さしすせそ
```

## FIG.15(D)

WP

DISPLAY START POSITION S

DATA TO BE TRANSFERRED TO DIVIDED REGION X

```
123456789
ABCDEFG      14
HIJKLMN      28
OPQRSTU
XWXYZ
あいうえおか
きくけこ
さしすせそ
```

IMAGE TO BE DISPLAYED IN DIVIDED REGION Y

WPs

EP 1 978 507 A1

## FIG.16(A)

壱弐参四五六七八九
いろはにほへとちり
あいうえおかききけ
東京特許許可局

## FIG.16(B)

壱弐参四五
いろはにほ

六七八九
へとちり

## FIG.16(C)

壱弐参四五

六七八九

## FIG.17(A)

```
1 2 3 4 5 6 7 8 9
A B C D E F G H I
J K L M N O P Q R
S T U V W X Y Z
```

## FIG.17(B)

```
1 2 3 4 5
A B C D E
J K L M N
```

```
6 7 8 9
F G H I
O P Q R
```

## FIG.17(C)

```
1 2 3 4 5
```

```
6 7 8 9
```

## FIG.18(A)

壱弐参四五六七
いろはにほへと
あいうえおかき
東京特許許可局
日本銀行国庫局

## FIG.18(B)

壱弐参四五六七
いろはにほへと
あいうえおかき

## FIG.18(C)

壱弐参四
いろはと
五六七
ほへと

## FIG.18(D)

壱弐参四
五六七

# FIG.19

START — S200

READ ACCELERATION SENSOR — S202

VIEW ORIENTATION = DISPLAY PANEL ORIENTATION — S204

YES →

NO ↓

DISPLAY PANEL ORIENTATION = PORTRAIT — S206

NO →

YES ↓ S208

VIEW ORIENTATION = PORTRAIT MAGNIFICATION SCALE = 100%

S210

VIEW ORIENTATION = LANDSCAPE MAGNIFICATION SCALE = 133%

ACCEPT KEY INPUT — S212

NEXT KEY — S214

NO →

YES ↓

RETURN KEY — S220

NO →

YES ↓

ACQUIRE DISPLAY REGION HEIGHT CORRESPONDING TO MAGNIFICATION SCALE — S216

ACQUIRE DISPLAY REGION HEIGHT CORRESPONDING TO MAGNIFICATION SCALE — S222

PAGE FORWARD PROCESS — S218

PAGE RETURN PROCESS — S224

DISPLAY PROCESS — S226

| | |
|---|---|
| **INTERNATIONAL SEARCH REPORT** | International application No. |
| | PCT/JP2007/051171 |

**A. CLASSIFICATION OF SUBJECT MATTER**
*G09G5/36*(2006.01)i, *G06F3/048*(2006.01)i, *G06T11/60*(2006.01)i, *G09G5/00*
(2006.01)i, *H04N1/393*(2006.01)i

According to International Patent Classification (IPC) or to both national classification and IPC

**B. FIELDS SEARCHED**

Minimum documentation searched (classification system followed by classification symbols)
G09G5/00-5/42, G06F3/048, 3/14-3/153, H04N1/38-1/393

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2003-280622 A (Matsushita Electric Industrial Co., Ltd.),<br>02 October, 2003 (02.10.03),<br>Par. Nos. [0080] to [0084]; Figs. 10, 11<br>& WO 2003/081570 A1 & AU 2002359954 A1 | 1,2,7-9<br>3-6,10-16 |
| X<br>A | JP 2005-156627 A (Sharp Corp.),<br>18 June, 2005 (18.06.05),<br>Par. Nos. [0095] to [0123], [0158] to [0175];<br>Figs. 3 to 8<br>(Family: none) | 1,2,7-9,16<br>3-6,10-15 |
| A | JP 7-99555 A (Mitsubishi Electric Corp.),<br>11 April, 1995 (11.04.95),<br>Par. Nos. [0012] to [0015]; Figs. 4, 5<br>(Family: none) | 1-16 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>27 February, 2007 (27.02.07) | Date of mailing of the international search report<br>13 March, 2007 (13.03.07) |
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI0887521 B